(19) Europäisches Patentamt | European Patent Office | Office européen des brevets

(11) **EP 3 159 550 B1**

(12) # EUROPEAN PATENT SPECIFICATION

(45) Date of publication and mention
of the grant of the patent:
**01.05.2019 Bulletin 2019/18**

(21) Application number: **15811218.5**

(22) Date of filing: **10.06.2015**

(51) Int Cl.:
*F15B 11/028* *(2006.01)*      *E02F 9/22* *(2006.01)*
*F15B 11/00* *(2006.01)*      *F15B 11/05* *(2006.01)*
*F15B 11/16* *(2006.01)*      *E02F 3/32* *(2006.01)*

(86) International application number:
**PCT/JP2015/066779**

(87) International publication number:
**WO 2015/198868 (30.12.2015 Gazette 2015/52)**

(54) **HYDRAULIC DRIVING SYSTEM FOR A CONSTRUCTION MACHINE**

HYDRAULISCHE ANTRIEBSVORRICHTUNG FÜR EINE BAUMASCHINE

DISPOSITIF DE COMMANDE HYDRAULIQUE D'ENGIN DE CHANTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2014 JP 2014128018**

(43) Date of publication of application:
**26.04.2017 Bulletin 2017/17**

(73) Proprietor: **HITACHI CONSTRUCTION
MACHINERY TIERRA CO., LTD.
Minakuchicho, Koka-shi,
Shiga
5280061 (JP)**

(72) Inventors:
• **TAKAHASHI Kiwamu
Tsuchiura-shi
Ibaraki 300-0013 (JP)**
• **MORI Kazushige
Tsuchiura-shi
Ibaraki 300-0013 (JP)**
• **ITO Masamichi
Tsuchiura-shi
Ibaraki 300-0013 (JP)**

• **TAKEBAYASHI Yoshifumi
Tsuchiura-shi
Ibaraki 300-0013 (JP)**
• **NAKAMURA Natsuki
Tsuchiura-shi
Ibaraki 300-0013 (JP)**
• **OKAZAKI Yasuharu
Toyama-shi
Toyama 930-8511 (JP)**
• **YAMADA Kenji
Toyama-shi
Toyama 930-8511 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2014/061507      WO-A1-2014/061507
JP-A- 2003 113 802      JP-A- 2004 308 899
JP-A- 2008 224 039      JP-B2- 3 854 027
JP-U- H0 687 467**

## Description

Technical Field

The present invention relates generally to hydraulic driving systems for construction machines, such as hydraulic excavators, that include a hydraulic pump of variable displacement type. More particularly, the invention is directed to hydraulic driving systems for construction machines, that performs load-sensing control to control the capacity of a hydraulic pump such that a differential pressure between a delivery pressure of the hydraulic pump and the highest load pressure of a plurality of actuators is maintained at a target differential pressure.

Background Art

A hydraulic driving system that performs load-sensing control to control a capacity of a hydraulic pump such that a differential pressure between a delivery pressure of the hydraulic pump and the highest load pressure of a plurality of actuators is maintained at a target differential pressure has traditionally been used in construction machines such as hydraulic excavators. Patent Document 1 describes an example of such a hydraulic driving system.
The hydraulic driving system described in Patent Document 1 includes a differential pressure reducing valve configured to output, as an absolute pressure, the differential pressure between the delivery pressure of the hydraulic pump and the highest load pressure of the plurality of actuators, and the absolute pressure is introduced as a feedback load-sensing (LS) differential pressure into an LS control valve of a pump regulator, and further an absolute pressure varied according to revolution speed of an engine is introduced into the LS control valve as a target LS differential pressure to perform load-sensing control. In addition, the absolute pressure output from the differential pressure reducing valve (the differential pressure between the delivery pressure of the hydraulic pump and the highest load pressure) is introduced into a plurality of pressure compensating valves as a target compensation differential pressure to control the differential pressures across flow control valves.
By introducing the differential pressure between the delivery pressure of the hydraulic pump and the highest load pressure into the plurality of pressure compensating valves as the target compensation differential pressure and controlling the differential pressures across the flow control valves in this way, when two or more actuators are simultaneously operated, if there occurs saturation in which a flow rate of the hydraulic fluid delivered from the hydraulic pump is less than those demanded by the flow control valves, the differential pressure between the delivery pressure of the hydraulic pump and the highest load pressure decreases in accordance with the degree of saturation, which in turn reduces the target compensation differential pressure across the particular pressure compensating valve and hence the differential pressure across the particular flow control valve. The flow rate of the hydraulic fluid delivered from the hydraulic pump, therefore, can be redistributed according to a ratio of the flow rates demanded by the flow control valves, and as a result, appropriate operability can be obtained during such combined operation.
Further, by performing load-sensing control such that the absolute pressure, which is variable in accordance with the revolution speed of the engine, is used as the target LS differential pressure and introduced into the LS control valve, when the revolution speed of the engine is reduced from its rating, the target LS differential pressure correspondingly decreases. Thus, the flow rate of the hydraulic fluid supplied from the hydraulic pump to the actuators also decreases, which enables fine operability to improve.
In the hydraulic driving system that introduces the differential pressure between the delivery pressure of the hydraulic pump and the highest load pressure into the pressure compensating valves as the target compensation differential pressure, when two or more actuators are operated at the same time, in cases where one of the actuators is of a cylinder type and this actuator reaches a stroke end, the differential pressure between the delivery pressure of the hydraulic pump and the highest load pressure becomes zero (0) and hence the target compensation differential pressure also becomes 0, which fully closes the pressure compensating valves and stop the other actuator(s).
The hydraulic driving system described in Patent Document 1 employs a measure for preventing such a stoppage of an actuator. More specifically, the system further includes, in a highest load pressure line, a signal pressure variable relief valve that renders a set pressure of the valve changeable according to the particular target compensation differential pressure. When a specific actuator reaches a stroke end and the delivery pressure of the hydraulic pump increases to a set pressure of a main relief valve, the system activates the signal pressure variable relief valve to limit the maximum pressure of the highest load pressure to a pressure lower than the set pressure of the main relief valve. Accordingly, even after the specific actuator has reached its stroke end, the differential pressure between the delivery pressure of the hydraulic pump and the highest load pressure does not become 0, which prevents the pressure compensating valves from fully closing, prevent the other actuator(s) from stopping, and maintain the appropriate operability during combined operation.
On the other hand, so-called boost circuits are known. These circuits are designed such that only when a specific actuator is operated, the circuit increases the set pressure of the main relief valve by a predetermined value from a first value to a second value and increases the maximum delivery pressure of the hydraulic pump. Patent Document 2 describes an example of such boost circuits.

The traveling excavation machine, such as a hydraulic excavator, that is described in Patent Document 2 includes a main relief valve configured as a variable relief valve so as to increase a pressure setting of the main relief valve from a first value to a second value only when an operating pilot pressure for a track operating device is introduced into the main relief valve and a control lever of the track operating device is operated. This configuration of the machine ensures generation of the output torque required of track motors during track operation, and improves traveling performance of the machine.

Prior Art Documents

Patent Documents

Patent Document 1: Japanese Patent No. 3854027
Patent Document 2: Japanese Utility Model Application No. 2600928

Summary of the Invention

Problems to be Solved by the Invention

In the load-sensing control hydraulic driving system in Patent Document 1 that includes the signal pressure variable relief valve in the highest load pressure line, however, the following problems were found to exist if the main relief valve is configured to work as the variable relief valve so as to increase the set pressure of the main relief valve from the first value to the second value during track operation, as in Patent Document 2.

That is to say, if during the track operation any impacts such as presence of an obstacle or inclination of a slope climbing travel surface cause a track motor to stop rotating, originally the delivery pressure of the hydraulic pump is supposed to increase to the second value of the set pressure of the main relief valve. However, since the maximum pressure of the highest load pressure is limited by the signal pressure variable relief valve to a pressure smaller than the first value of the set pressure of the main relief valve, load-sensing control enables the delivery pressure of the hydraulic pump to increase to a pressure obtained by adding a load-sensing control target differential pressure to the highest load pressure that has been limited to the pressure smaller than the first value of the set pressure of the main relief valve by the signal pressure variable relief valve. Consequently the load pressure upon the track motor fails to increase to the second value of the set pressure of the main relief valve, for which reason, the generation of the track motor output torque due to the increase in the set pressure of the main relief valve becomes ineffective.

An object of the present invention is to provide a hydraulic driving system for a construction machine, that controls a capacity of a hydraulic pump by load-sensing control such that a differential pressure between a delivery pressure of the hydraulic pump and the highest load pressure of a plurality of actuators is maintained at a target differential pressure, in which during a combined operation for simultaneously driving a plurality of actuators, even when one of the actuators has reached its stroke end and the delivery pressure of the hydraulic pump has increased to a set pressure of a main relief valve, the other actuators remain active, and further, when the set pressure of the main relief valve is made variable and the set pressure of the main relief valve increases during operation of a specific actuator, the load pressure of the specific actuator can reliably rises to the increased set pressure of the main relief valve.

Means for Solving the Problems

To achieve the above object, the present invention provides a hydraulic driving system for a construction machine comprising: a hydraulic pump of variable displacement type driven by a prime mover; a plurality of actuators each driven by a hydraulic fluid delivered from the hydraulic pump; a plurality of flow control valves that each control a flow rate of the hydraulic fluid supplied from the hydraulic pump to a corresponding one of the plurality of actuators; a plurality of pressure compensating valves each for controlling a differential pressure across a corresponding one of the flow control valves independently such that the differential pressure across the corresponding flow control valve equals a target compensation differential pressure; a pump control device for controlling a capacity of the hydraulic pump by load-sensing control such that a delivery pressure of the hydraulic pump becomes higher by a target differential pressure than a highest load pressure of the plurality of actuators; a main relief valve that limits a maximum pressure of the delivery pressure of the hydraulic pump; a highest load pressure detection circuit that detects a highest load pressure of the actuators and outputs the detected highest load pressure to a highest load pressure line; and a signal pressure relief valve connected to the highest load pressure line via a restrictor and configured to limit the maximum pressure of the highest load pressure introduced to a downstream side of the restrictor, to a pressure lower than a set pressure of the main relief valve; wherein, the pump control device receives a differential pressure between the delivery pressure of the hydraulic pump and the highest load pressure in the downstream side of the restrictor and the pump control device controls the capacity of the hydraulic pump such that the differential pressure equals the target differential pressure for the load-sensing control, while the differential pressure between the delivery pressure of the hydraulic pump and the highest load pressure in the downstream side of the restrictor is introduced into the plurality of pressure compensating valves as the target compensation differential pressure; and wherein: the main relief valve is configured such that when a specific actuator of the plurality of actuators is not actuated, the set pressure of the main relief valve is remained at a first value, and when the specific actuator is actuated, the set pressure of the main relief valve increases from the first value to a second value larger than the first value; and the signal pressure relief valve is configured such that when the specific actuator is not actuated and the set pressure of the main relief valve is remained at the first value, the set pressure of the signal pressure relief valve is remained at a third value smaller than the first value of the set pressure of the main relief valve, when the specific actuator is actuated and the set pressure of the main relief valve increases to the second value, the set pressure of the signal pressure relief valve increases from the third value to a fourth value smaller than the second value of the set pressure of the main relief valve, the first to forth values being set such that a difference between the first value of the set pressure of the main relief valve and the third value of the set pressure of the signal pressure relief valve and a difference between the second value of the set pressure of the main relief valve and the fourth value of the set pressure of the signal pressure relief valve are both smaller than the target differential pressure for the load-sensing control.

By providing the main relief valve and the signal pressure relief valve in this way, since during operation of actuators other than the specific actuator the set pressure of the signal pressure relief valve is the third value smaller than the first value of the set pressure of the main relief valve, when the non-specific actuator has reached a stroke end and the delivery pressure of the hydraulic pump has increased to the first value of the set pressure of the main relief valve, the highest load pressure is limited to a pressure smaller than the first value of the set pressure of the main relief valve, and the differential pressure between the delivery pressure of the hydraulic pump and the highest load pressure does not become 0, and hence the pressure compensating valves do not fully close. Therefore, the non-specific actuator (one of the other actuators) remains active and maneuverability is maintained during combined operation.

In addition, since during the operation of the specific actuator, the set pressure of the main relief valve increases from the first value to the second value, the set pressure of the signal pressure relief valve increases from the third value to the fourth value smaller than the second value of the set pressure of the main relief valve, and a value of the difference between the second value of the set pressure of the main relief valve and the fourth value of the set pressure of the signal pressure relief valve is smaller than the target differential pressure for the load-sensing control, the load-sensing control works to increase the delivery pressure of the hydraulic pump to the second value of the set pressure of the main relief valve, thus reliably increasing the load pressure of the specific actuator to the second value of the increased set pressure of the main relief valve, and hence providing necessary driving force.

Furthermore, since when the combined operation for driving the other actuators is conducted in that state and the other actuators reach respective stroke ends and the delivery pressure of the hydraulic pump increases to the second value of the set pressure of the main relief valve, the highest load pressure is limited to the fourth pressure smaller than the second value of the set pressure of the main relief valve, and therefore as in the case where the non-specific actuator described above is operated, the differential pressure between the delivery pressure of the hydraulic pump and the highest load pressure does not become 0 and the pressure compensating valves do not fully close. Therefore, in this case as well, the non-specific actuator (one of the other actuators) remains active and maneuverability is maintained during the combined operation.

Advantages of the Invention

In accordance with the present invention, in the hydraulic driving system for construction machines, that controls a capacity of the hydraulic pump by load-sensing control such that a differential pressure between the delivery pressure of the hydraulic pump and the highest load pressure of the plurality of actuators is maintained at the target differential pressure, during the combined operation for simultaneously driving the plurality of actuators, even when one of the actuators has reached the stroke end and the delivery pressure of the hydraulic pump has increased to the set pressure of the main relief valve, the other actuators remain active and the maneuverability can be obtained during the combined operation. In addition, when the set pressure of the main relief valve is made variable and the set pressure of the main relief valve increases during operation of a specific actuator, the load pressure of the specific actuator can relaiably rises to the increased set pressure of the main relief valve, and thus the necessary driving force can be obtained.

Brief Description of Drawings

Fig. 1 is a diagram showing a hydraulic driving system of a hydraulic excavator (construction machine) according to an embodiment of the present invention.
Fig. 2 is a diagram that shows changes in set pressure of a main relief valve and a signal pressure variable relief valve with respect to changes in track operating signal pressure.
Fig. 3 is an external view of the hydraulic excavator including the hydraulic driving system of the present invention.
Fig. 4 is a diagram showing a comparative example.

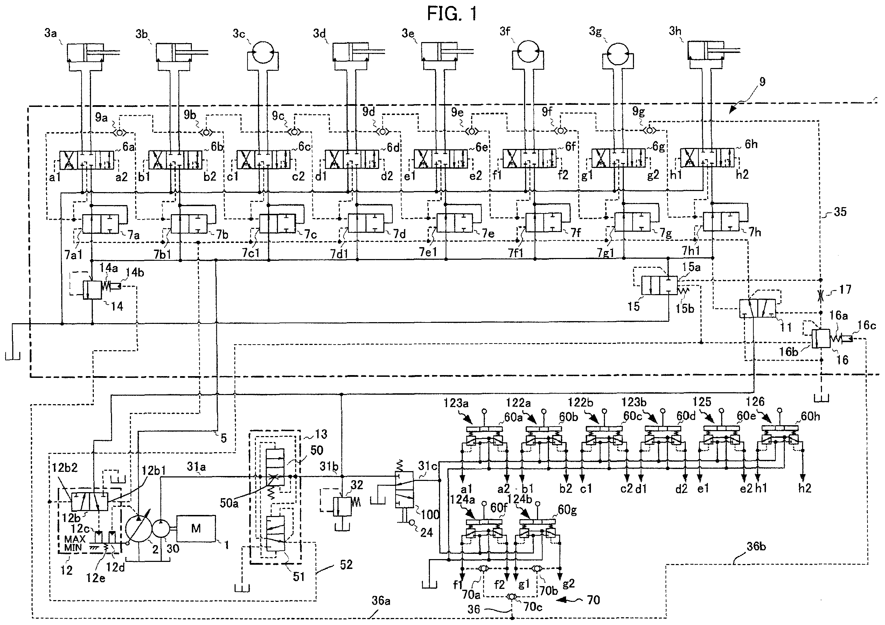

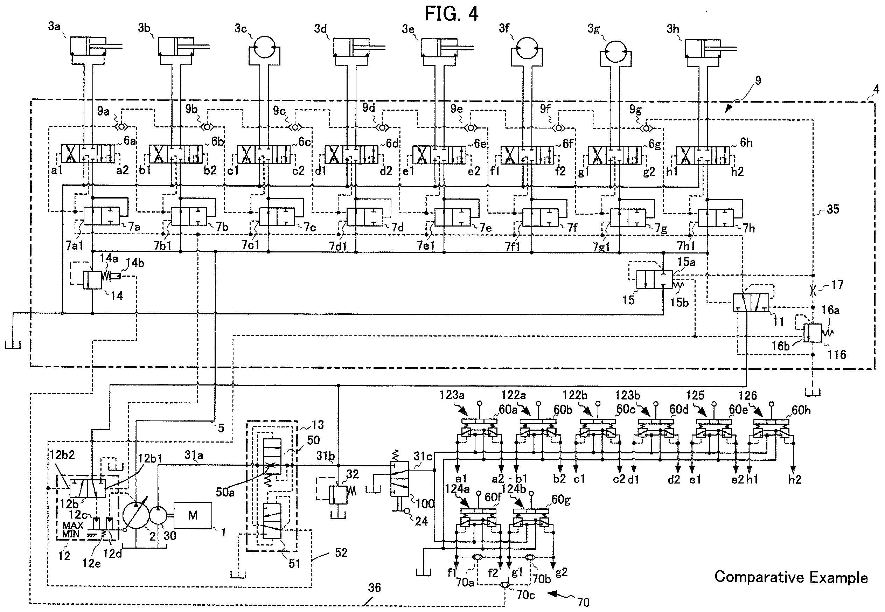

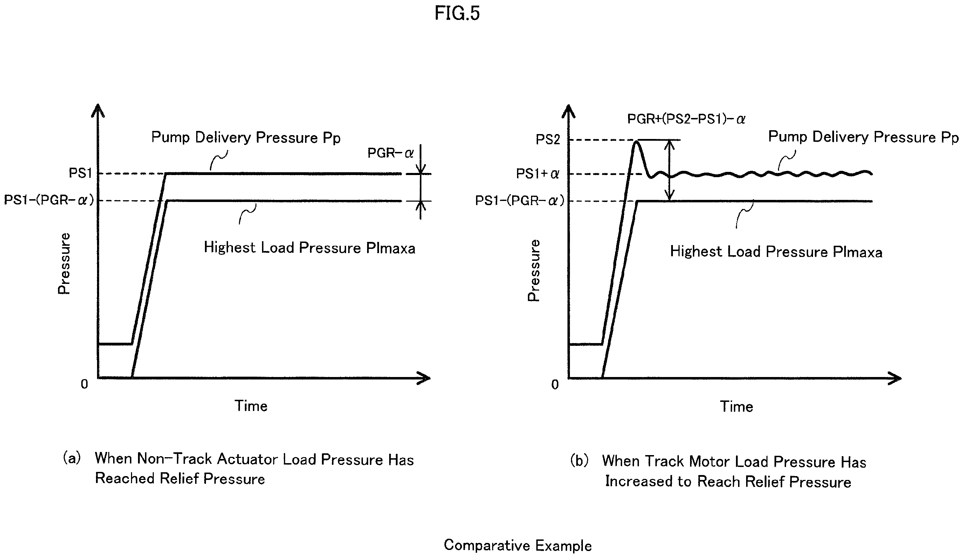

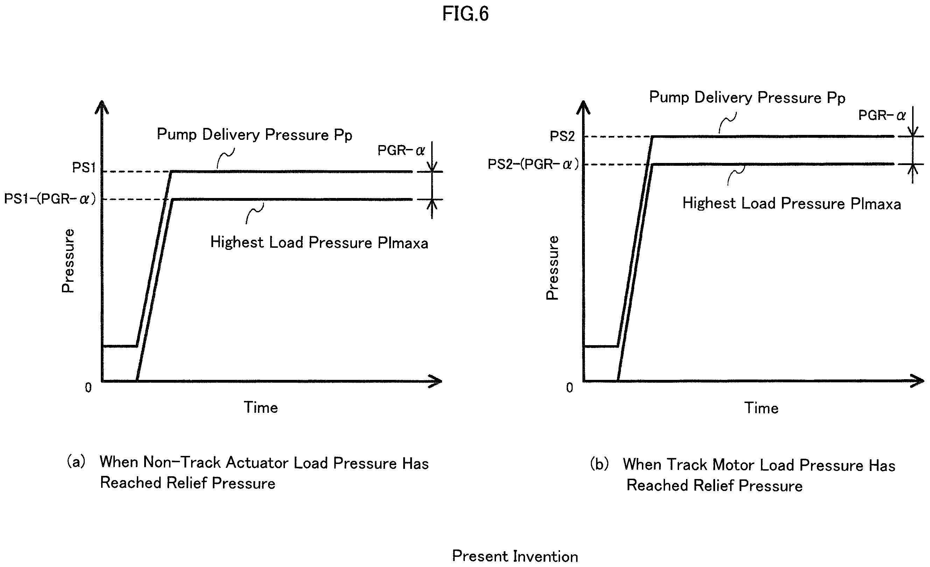

Left side (a) of Fig. 5 is a diagram relating to the comparative example shown in Fig. 4, the diagram representing a relationship between a delivery pressure obtained when a control lever of a non-track operating device is operated and the delivery pressure of a main pump reaches a set pressure of the main relief valve, and the highest load pressure in which a maximum pressure is limited by the signal pressure variable relief valve, right side (b) of Fig. 5 is a diagram relating to the comparative example shown in Fig. 4, the diagram representing a relationship between a delivery pressure obtained when a control lever of a track operating device is operated and the delivery pressure of the main pump reaches a set pressure of the main relief valve, the track operating signal pressure is equal to or higher than its threshold level, and the delivery pressure of the main pump reaches a set pressure of the main relief valve, and the highest load pressure in which the maximum pressure is limited by the signal pressure variable relief valve.
Left side (a) of Fig. 6 is a diagram relating to the embodiment shown in Fig. 1, the diagram representing a relationship between a delivery pressure obtained when a control lever of a non-track operating device is operated and the delivery pressure of a main pump reaches a set pressure of the main relief valve, and the highest load pressure in which a maximum pressure is limited by the signal pressure variable relief valve, and right side (b) of Fig. 6 is a diagram relating to the embodiment shown in Fig. 1, the diagram representing a relationship between a delivery pressure obtained when a control lever of a track operating device is operated and the delivery pressure of the main pump reaches a set pressure of the main relief valve, the track operating signal pressure is equal to or higher than its threshold level, and the delivery pressure of the main pump reaches a set pressure of the main relief valve, and the highest load pressure in which the maximum pressure is limited by the signal pressure variable relief valve.

Mode for Carrying Out the Invention

Hereunder, an embodiment of the present invention will be described in accordance with the accompanying drawings.

-Structure-

Fig. 1 is a diagram showing a hydraulic driving system of a hydraulic excavator (a construction machine) according to an embodiment of the present invention.
The hydraulic excavator of the present embodiment, shown in Fig. 1, includes the following: a prime mover 1 such as a diesel engine; a main pump 2 (hydraulic pump) of variable displacement type that is driven by the prime mover 1 and delivers a hydraulic fluid to a hydraulic fluid supply line 5; a fixed displacement pilot pump 30 that is driven by the prime mover 1 and delivers the hydraulic fluid to a hydraulic fluid supply line 31a; a plurality of actuators, namely 3a, 3b, 3c, 3d, 3e, 3f, 3g, and 3h, each driven by the hydraulic fluid delivered from the main pump 2; a control valve unit 4 that is connected to the hydraulic fluid supply line 5 and controls a flow of the hydraulic fluid supplied from the main pump 2 to the actuators 3a to 3h; and a regulator 12 (pump control device) that controls a delivery rate of the main pump 2 by load-sensing control and torque control.
The control valve unit 4 includes: a plurality of flow control valves 6a, 6b, 6c, 6d, 6e, 6f, 6g, and 6h that are each connected to the hydraulic fluid supply line 5 and control a flow rate and a flow direction of the hydraulic fluid supplied from the main pump 2 to the actuators 3a to 3h; a plurality of pressure compensating valves 7a, 7b, 7c, 7d, 7e, 7f, 7g, and 7h that each control a differential pressure across a corresponding one of the flow control valves 6a to 6h such that the differential pressure across the corresponding one of the flow control valves 6a to 6h equals a target differential pressure level, whereby the flow rate of the fluid controlled by each of the flow control valves 6a to 6h becomes proportional to a meter-in opening area of the flow control valve; a main relief valve 14 connected to the hydraulic fluid supply line 5 and configured to limit a maximum pressure of the pressure Pp of the hydraulic fluid supply line 5 (the delivery pressure of the main pump 2); an unloading valve 15 connected to the hydraulic fluid supply line 5 and configured such that when the pressure Pp of the hydraulic fluid supply line 5 (the delivery pressure of the main pump 2) increases above a set pressure (an unloading pressure) previously set by adding an unloading differential pressure PunO to a highest load pressure of the actuators 3a to 3h, the unloading valve 15 opens to return the hydraulic fluid within the hydraulic fluid supply line 5 to a tank; a highest load pressure detection circuit 9, which includes shuttle valves 9a, 9b, 9c, 9d, 9e, 9f, and 9g connected in tournament form to load ports of the flow control valves 6a to 6h to detect the highest load pressure Plmax of the actuators 3a to 3h, and outputs the detected highest load pressure Plmax to a highest load pressure line 35 connected to an output port of the shuttle valve 9g provided at a final stage of the shuttle valve set; a signal pressure relief valve 16 connected to the highest load pressure line 35 via a restrictor (fixed restrictor) 17 to limit a maximum pressure of the highest load pressure Plmaxa which has been introduced into a downstream side of the restrictor 17 in the highest load pressure line 35, to a pressure lower than the set pressure of the main relief valve 14; and a differential-pressure reducing valve 11 configured to output an absolute pressure Pls as a differential pressure between the delivery pressure (pump pressure) Pp of the main pump 2 and the highest load pressure Plmaxa in the downstream side of the restrictor 17 in the highest load pressure line 35.

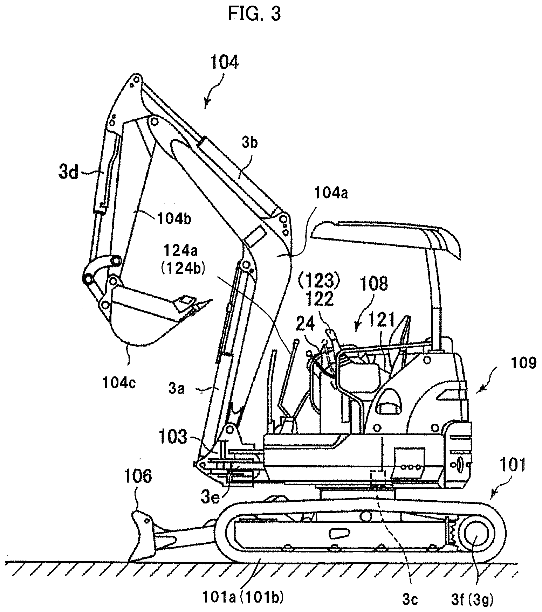

The actuator 3a is for example a boom cylinder that drives a boom 104a of the hydraulic excavator, shown in Fig. 3, the actuator 3b is for example an arm cylinder that drives an arm 104b of the hydraulic excavator, shown in Fig. 3, and the actuator 3c is for example a swing motor that drives an upper swing structure 109 of the hydraulic motor, shown in Fig. 3. The actuator 3d is for example a bucket cylinder that drives a bucket 104c shown in Fig. 3, the actuator 3e is for example a swing cylinder that drives a swing post 103 shown in Fig. 3, and the actuator 3f is for example a left track motor that drives a left crawler 101a of a lower track structure, shown in Fig. 3. The actuator 3g is for example a right track motor that drives a right crawler 101b of the hydraulic excavator lower track structure, shown in Fig. 3, and the actuator 3h is for example a blade cylinder that drives a blade 106 shown in Fig. 3.

In addition to the above constituent elements, the hydraulic driving system of the present embodiment includes: a prime mover revolution speed detection valve 13 connected to the hydraulic fluid supply line 31a of the pilot pump 30 and configured to detect, as an absolute pressure PGR, the flow rate of the fluid delivered from the pilot pump 30; a pilot relief valve 32 connected to a pilot hydraulic fluid supply line 31b in the downstream side of the prime mover revolution speed detection valve 13 and working to generate a constant pilot pressure Ppi in the pilot hydraulic fluid supply line 31b; a gate lock valve 100 connected to the pilot hydraulic fluid supply line 31b and serving to select whether a downstream hydraulic fluid supply line 31c is to be connected to the hydraulic fluid supply line 31b or the tank, depending on a state of a gate lock lever 24; a plurality of pilot valve units 60a, 60b, 60c, 60d, 60e, 60f, 60g, and 60h, each connected to the hydraulic fluid supply line 31c downstream of the gate lock valve 100 and including one pair of pilot valves (pressure reducing valves) to generate an operating pilot pressures a1 and a2, b1 and b2, c1 and c2, d1 and d2, e1 and e2, f1 and f2, g1 and g2, or h1 and h2, which are used to switch the flow control valves 6a to 6h, based on the constant pilot pressure Ppi; and a track operation detection circuit (specific actuator operations detection circuit) 70 including shuttle valves 70a, 70b, and 70c connected in tournament form to an output line of each pilot valve pair in the pilot valve units 60f and 60g.

The prime mover revolution speed detection valve 13 includes a flow rate detection valve 50 connected between the hydraulic fluid supply line 31a and pilot hydraulic fluid supply line 31b of the pilot pump 30, and a differential pressure reducing valve 51 configured to output a differential pressure across the flow rate detection valve 50 as the absolute pressure PGR.

The flow rate detection valve 50 includes a variable restrictor 50a, which increases an opening area of the valve 50 with increases in the flow rate of the fluid passed through the valve (i.e., the flow rate of the fluid delivered from the pilot pump 30). The oil delivered from the pilot pump 30 flows toward the pilot hydraulic fluid supply line 31b through the variable restrictor 50a of the flow rate detection valve 50. At the same time, there is a differential pressure, which becomes larger as the flow rate at the variable restrictor 50a increases, across the variable restrictor 50a of the flow rate detection valve 50. The differential pressure reducing valve 51 outputs this differential pressure to a signal pressure line 52 as the absolute pressure PGR. The flow rate of the fluid delivered from the pilot pump 30 depending on the revolution speed of the prime mover 1, detecting the differential pressure across the variable restrictor 50a allows the flow rate of the fluid delivered from the pilot pump 30 and also the revolution speed of the prime mover 1 to be detected.

The pilot valve units 60a, 60b, 60c, 60d, 60e, 60f, 60g, and 60h are provided in a boom operating device 123a, an arm operating device 122a, an swing operating device 122b, a bucket operating device 123b, a swing operating device 125, a left-track operating device 124a, a right-track operating device 124b, and a blade operating device 126, respectively. When control levers are operated by an operator, the pilot valve units comes into operation and generate the relevant operating pilot pressures a1 and a2, b1 and b2, c1 and c2, d1 and d2, e1 and e2, f1 and f2, g1 and g2, or h1 and h2.

The pilot valve units 60f and 60g with the shuttle valves 70a, 70b, and 70c connected thereto are for traveling purposes, and when the track operating device 124a or 124b is operated, the shuttle valve 70a, 70b, or 70c detects the corresponding pilot pressure (the highest pressure of four operating pilot pressures, f1, f2, g1, and g2) as a track operating signal pressure Ptpi and then output the detected track operating signal pressure Ptpi to a signal pressure line 36, 36a, or 36b connected to an output port of the shuttle valve 70c provided as a final stage.

The absolute pressure PGR that has been output from the differential pressure reducing valve 51 of the prime mover revolution speed detection valve 13 is introduced as a target LS differential pressure into the regulator 12. The absolute pressure PGR is also introduced, as part of the set pressure PunO, in the side operative in the valve closing direction. The absolute pressure Pls that has been output from the differential pressure reducing valve 51 is introduced as a feedback LS differential pressure into the regulator 12 of the main pump 2. The absolute pressure Pls is also introduced, as the target compensation differential pressure, in the side operative in the valve opening direction. In addition, the absolute pressure PGR that was output from the differential pressure reducing valve 51 of the prime mover revolution speed detection valve 13 is introduced into the signal pressure relief valve 16 as part of a set pressure PA described later in detail. Meanwhile, the track operating signal pressure Ptpi that has been detected by the track operation detection circuit 70 is introduced into the main relief valve 14 via the signal pressure line 36a as part of a set pressure PS described later in detail. The track operating signal pressure Ptpi is also introduced into the signal pressure relief valve 16 via the signal pressure line 36b as part of the set pressure PS described later in detail.

The regulator 12 includes an LS control valve 12b, an LS control piston (capacity control actuator) 12c, a torque control (horsepower control) piston (capacity control actuator) 12d, and a spring 12e.

The LS control valve 12b includes a pressure receiving element 12b1 at an end portion of the side operative in a direction in which a constant pilot pressure Ppi is introduced into the LS control piston 12c. The LS control valve 12b also includes a pressure receiving element 12b2 at an end portion of the side operative in a direction in which the hydraulic fluid in the LS control piston 12c is released to the tank. The absolute pressure Pls (feedback LS differential pressure) that was output from the differential pressure reducing valve 11 and passed through a switching valve 80 is introduced into the pressure receiving element 12b1, and the absolute pressure PGR (target LS differential pressure) that has been output from the prime mover revolution speed detection valve 13 is introduced into the pressure receiving element 12b2. If Pls>PGR, the LS control valve 12b operates to introduce the constant pilot pressure Ppi into the LS control piston 12c, and if Pls<PGR, the LS control valve 12b operates to release the hydraulic fluid in the LS control piston 12c to the tank. The LS control piston 12c operates to reduce tilting (capacity) of the main pump 2 when the constant pilot pressure Ppi is introduced and the pressure in the LS control piston 12c increases and operates to increase the tilting (capacity) of the main pump 2 when the pressure in the LS control piston 12c is released to the tank and the pressure decreases. Accordingly the differential pressure Pls that was output from the differential pressure reducing valve 11 (the differential pressure (feedback LS differential pressure) between the delivery pressure Pp of the main pump 2 and the highest load pressure Plmaxa in the downstream side of the restrictor 17 in the highest load pressure line 35) is controlled to be equal to the absolute pressure PGR (target LS differential pressure) that was output from the prime mover revolution speed detection valve 13, so that the delivery pressure Pp from the main pump 2 is controlled to be higher than the highest load pressure Plmaxa of the actuators 3a to 3h by the target differential pressure PGR. In this way, the LS control valve 12b and the LS control piston 12c constitute a load-sensing control section to control the capacity of the main pump 2 such that the delivery pressure Pp of the main pump 2 is higher than the highest load pressure Plmaxa of the actuators 3a to 3h by the target differential pressure PGR.

The delivery pressure of the main pump 2 is introduced to the torque control piston 12d. The increase in the delivery pressure reduces the tilting (capacity) of the main pump 2 and thus controls torque that the main pump 2 absorbs does not exceed a predetermined torque value. The spring 12e sets a torque limit for the torque control. In this way, the torque control piston 12d and the spring 12e constitute a torque control section to control the capacity of the main pump 2 such that the torque that the main pump 2 absorbs does not exceed the torque limit when the delivery pressure of the main pump 2 increases.

The pressure compensating valves 7a to 7h include, in the respective sides operative in the valve opening direction, pressure receiving elements, namely 7a1, 7b1, 7c1, 7d1, 7e1, 7f1, 7g1, and 7h1, into which the absolute pressure Pls that was output from the differential pressure reducing valve 11 is introduced, and the absolute pressure Pls is set as the target compensation differential pressure. The pressure compensating valves 7a to 7h each control the differential pressure across a corresponding one of the flow control valves 6a to 6h such that the differential pressure equals the target compensation differential pressure. Thus during combined operation that drive a plurality of actuators at the same time, the flow rate of the fluid delivered from the main pump 2 is appropriately distributed according to the opening areas of the flow control valves, irrespective of the magnitudes of the load pressures of the actuators, and consequently, maneuverability is ensured during the combined operation. If the flow rate of the fluid delivered from the main pump 2 enters a saturation state in which the flow rate is less than that actually demanded, since the absolute pressure Pls output by the differential pressure reducing valve 11 decreases according to the shortage level of the supplied fluid, the target compensation differential pressure across the pressure compensating valve correspondingly decreases. In this case as well, the flow rate of the fluid delivered from the main pump 2 is appropriately distributed according to the opening area of that flow control valve and consequently, maneuverability is ensured during the combined operation.

The unloading valve 15 includes, in the side operative in the valve closing direction, a pressure receiving element 15a into which the absolute pressure PGR (target LS differential pressure) that was output from the prime mover revolution speed detection valve 13 is introduced. The unloading valve 15 further includes a spring 15b in the same side operative in the valve closing direction. In addition, the unloading valve 15 is configured such that the pressure Pp of the hydraulic fluid supply line 5, that is, the delivery pressure of the main pump 2, is applied to the unloading valve 15 in the side operative in the valve opening direction and the highest load pressure Plmax detected by the highest load pressure detection circuit 9 is applied to the side operative in the valve closing direction. The unloading valve 15 has its set pressure defined by three factors, namely the absolute pressure PGR (target LS differential pressure), an urging force of the spring 15b, and the highest load pressure Plmax. That is to say, the set pressure of the unloading valve 15 is assigned as a pressure obtained by adding the absolute pressure PGR (target LS differential pressure), a pressure conversion value of the urging force of the spring 15b, and the highest load pressure Plmax. When the delivery pressure Pp of the main pump 2 increases above the set pressure of the unloading valve 15, the unloading valve 15 opens to return the fluid within the hydraulic fluid supply line 5 to the tank, thus causing the delivery pressure Pp of the main pump 2 to be controlled so as not to be higher than a pressure obtained by adding the pressure conversion value of the urging force of the spring 15b to the target LS differential pressure PGR. The pressure conversion value of the urging force of the spring 15b is usually smaller than the target LS differential pressure PGR.

The main relief valve 14 includes a spring 14a and a pressure receiving element 14b (a first pressure receiving element) in the side operative in the valve closing direction. The pressure receiving element 14b is connected to the signal pressure line 36a, and the track operating signal pressure Ptpi that was detected by the track operation detection circuit 70 is applied to the pressure receiving element 14b. When neither the track operating device 124a nor 124b is actuated and the track operating signal pressure Ptpi is the tank pressure, the set pressure PS of the main relief valve 14 takes a first value PS1 that has been set for the spring 14a. When at least one of the track operating devices 124a and 124b is actuated and the track operating signal pressure Ptpi equals or exceeds a threshold level Ptr, the urging force of the spring 14a and the track operating signal pressure Ptpi applied to the pressure receiving element 14b causes the set pressure PS of the main relief valve 14 to increase from the first value PS1 to a second value PS2 larger than the first value PS1. As can be seen from this fact, the main relief valve 14 is configured as a variable relief valve that changes the set pressure PS to one of the two values, namely PS1 and PS2, depending on the track operating signal pressure Ptpi applied to the pressure receiving element 14b.

The signal pressure relief valve 16 includes a spring 16a in the side operative in the valve closing direction and a first pressure receiving element 16b in the side operative in the valve opening direction. The pressure receiving element 16b is connected to the signal pressure line 52. The signal pressure relief valve 16 is configured as a variable relief valve that changes the set pressure PA according to the output pressure (absolute pressure) PGR of the prime mover revolution speed detection valve 13 that is applied to the pressure receiving element 14b.

In addition, the signal pressure relief valve 16 includes a second pressure receiving element 16c (second pressure receiving element) in the side operative in the valve closing direction. The pressure receiving element 16c is connected to a signal pressure line 36b, and the track operating signal pressure Ptpi detected by the track operation detection circuit 70 is applied to the pressure receiving element 16c. When neither the track operating device 124a nor 124b is actuated and the track operating signal pressure Ptpi is the tank pressure, a set pressure PA of the signal pressure relief valve 16 is a third value PA1 based on an urging force of the spring 16a and an absolute pressure PGR applied to the pressure receiving element 16b. When at least one of the track operating devices 124a and 124b is actuated and the track operating signal pressure Ptpi equals or exceeds the threshold level Ptr, the set pressure PA of the signal pressure relief valve 16 increases from the third value PA1 to a fourth value PA2 larger than the third value PA1. As can be seen from this, the signal pressure relief valve 16 is also configured as a variable relief valve that changes the set pressure PA to one of the two values, namely PA1 and PA2, depending on the pressure applied to the pressure receiving element 16c. The signal pressure relief valve 16 will be referred to as the signal pressure variable relief valve.

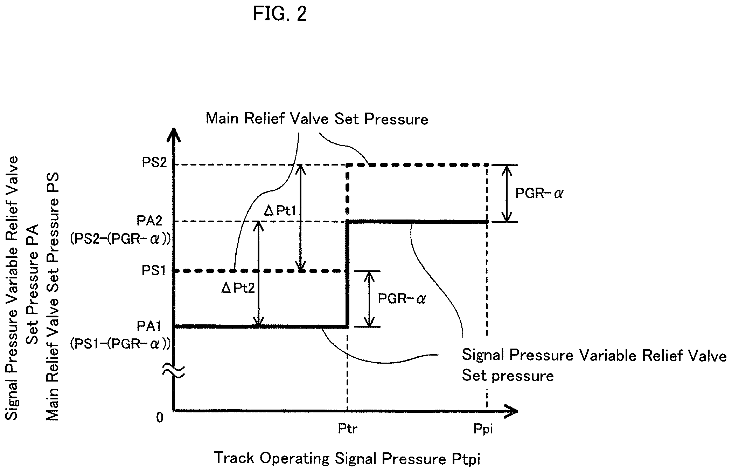

Fig. 2 is a diagram that shows changes in the set pressures of the main relief valve 14 and the signal pressure variable relief valve 16 with respect to the track operating signal pressure Ptpi. A horizontal axis in the figure denotes the track operating signal pressure Ptpi detected by the track operation detection circuit 70, and a vertical axis denotes the set pressures PS and PA of the main relief valve 14 and the signal pressure variable relief valve 16.

Fig. 2 indicates that when neither the track operating device 124a nor 124b is actuated and the track operating signal pressure Ptpi is the tank pressure, the set pressure PS of the main relief valve 14 takes the first value PS1 because the urging force of the spring 14a is applied. Fig. 2 also indicates that when at least one of the track operating devices 124a and 124b is actuated and the track operating signal pressure Ptpi equals or exceeds the threshold level Ptr, the set pressure PS of the main relief valve 14 increases by $\Delta Pt1$ from the first value PS1 to the second value PS2 larger than the first value PS1. This increase is due to the track operating signal pressure Ptpi applied to the pressure receiving element 14b. The increment $\Delta Pt1$ is a pressure value set by the application of the track operating signal pressure Ptpi to the pressure receiving element 14b of the main relief valve 14.

When neither the track operating device 124a nor 124b is actuated and the track operating signal pressure Ptpi is the tank pressure, the set pressure PA of the signal pressure variable relief valve 16 remains the third value PA1 due to the urging force of the spring 16a and the absolute pressure PGR applied to the pressure receiving element 16b. When at least one of the track operating devices 124a and 124b is actuated and the track operating signal pressure Ptpi equals or exceeds the threshold level Ptr, the set pressure PA of the signal pressure variable relief valve 16 increases by $\Delta$Pt2 from the third value PA1 to the fourth value PA2 larger than the third value PA1 due to the track operating signal pressure Ptpi applied to the pressure receiving element 16c. The increment $\Delta$Pt2 is a pressure value set by the application of the track operating signal pressure Ptpi higher than the threshold level Ptr, to the pressure receiving element 16c of the signal pressure variable relief valve 16. In the present embodiment, $\Delta$Pt2 =$\Delta$Pt1.

Here, the spring 16a is configured to have a spring constant equivalent to a pressure value PS1+$\alpha$, and the set pressure PA of the signal pressure variable relief valve 16 is controlled to satisfy the following expressions by the spring 16a, the absolute pressure PGR applied to the pressure receiving element 16b and the track operating signal pressure Ptpi applied to the pressure receiving element 16c.

- When the track operating signal pressure Ptpi applied to the pressure receiving element 16c is the tank pressure-

$$PA1 = PS1 + \alpha - PGR$$

- When the track operating signal pressure Ptpi applied to the pressure receiving element 16c is equal to or greater than the tank pressure-

$$PA2 = PS1 + \alpha + \Delta Pt2 - PGR$$

$$= PS1 + \alpha + \Delta Pt1 - PGR$$

$$= PS2 + \alpha - PGR$$

Transformation of the above expressions gives:

$$PA1 = PS1 - (PGR - \alpha)$$

$$PA2 = PS2 - (PGR - \alpha)$$

where $\alpha$ is an LS control adjustment value greater than 0, but less than PGR (i.e., $0<\alpha<$PGR).

Briefly, in both of the cases where neither the track operating device 124a nor 124b is actuated and where at least one of the track operating devices 124a and 124b is actuated, the set pressures PA1 and PA2 of the signal pressure variable relief valve 16 are controlled to be lower than the set pressures PS1 and PS2, respectively, of the main relief valve 14 by PGR-$\alpha$. Since $0<\alpha<$PGR as shown above, PGR-$\alpha$ takes a value smaller than the target LS differential pressure PGR (the target differential pressure for load-sensing control).

In other words, the signal pressure variable relief valve 16 is configured such that: when neither the track operating device 124a nor 124b is actuated and the set pressure PS of the main relief valve 14 takes the first value PS1, the set pressure PA1 of the signal pressure variable relief valve 16 is the third value PA1 smaller than the first value PS1 of the set pressure PS of the main relief valve 14; when at least one of the track operating devices 124a and 124b is actuated and the set pressure PS of the main relief valve 14 increases to the second value PS2, the set pressure PA of the signal pressure variable relief valve 16 increases from the third value PA1 to the fourth value PA2 smaller than the second value PS2 of the set pressure PS of the main relief valve 14; and the difference $\Delta$Pt1 between the first value PS1 of the set pressure PS of the main relief valve 14 and the third value PA1 of the set pressure PA of the signal pressure variable relief valve, and the difference between the second value PS2 of the set pressure PS of the main relief valve 14 and the fourth value PA2 of the set pressure PA of the signal pressure variable relief valve 16 are both controlled to be smaller than the target differential pressure PGR for load-sensing control.

In addition, the signal pressure variable relief valve 16 is configured to ensure that the absolute pressure PGR applied to the pressure receiving element 16b is introduced as the target LS differential pressure into the regulator 12, and thus that as the target LS differential pressure PGR (the target differential pressure for load-sensing control) decreases, the third value PA1 and fourth value PA2 of the set pressure increases and the absolute pressure Pls output from the differential pressure reducing valve 11, that is, the differential pressure between the delivery pressure of the main pump 2 and the highest load pressure Plmaxa in the downstream side of the restrictor 17, decreases.

Fig. 3 is an external view of the hydraulic excavator including the hydraulic driving system described above.

Referring to Fig. 3, the hydraulic excavator well known as a work machine, includes a lower track structure 101, an upper swing structure 109, and a front work implement 104 of a swing type. The front work implement 104 is constituted by a boom 104a, an arm 104b, and a bucket 104c. The upper swing structure 109 is designed to swing with respect to the lower track structure 101 via a swing motor 3c. A swing post 103 is installed at a front section of the upper swing structure 109, and the front work implement 104 is attached to the swing post 103 so as to be movable vertically. The swing post 103 can be turned in a horizontal direction with respect to the upper swing structure 109 by extending/retracting a swing cylinder 3e, and the boom 104a, arm 104b, and bucket 104c of the front work implement 104 can be turned in a vertical direction by extending/retracting a boom cylinder 3a, an arm cylinder 3b, and a bucket cylinder 3d, respectively. A blade 106 actuated vertically by extension/retraction of a blade cylinder 3h is attached to a central frame of the lower track structure 101. Rotation of track motors 3f and 3g drives left and right crawlers 101a and 101b, respectively, thus causing the lower track structure 101 to travel.

The upper swing structure 109 includes a cabin 108 of a canopy type. The cabin 108 includes therein an operator's seat 121, left and right operating devices 122 and 123 for front work/swinging (only the left operating device is shown in Fig. 3), track operating devices 124a and 124b (only the left operating device is shown in Fig. 3), a swing operating device 125 (see Fig. 1), a blade operating device 126 (see Fig. 1), a gate lock lever 24, and more. Control levers of the operating devices 122 and 123 can each be operated in any direction from a neutral position, with a cross direction taken as its reference. When the control lever of the left operating device 122 is operated forward or backward, the operating device 122 functions as an operating device 122b for swinging purposes (see Fig. 1), and when the control lever of the left operating device 122 is operated leftward or rightward, the operating device 122 functions as an arm operating device 122a (see Fig. 1). When the control lever of the right operating device 123 is operated forward or backward, the operating device 123 functions as a boom operating device 123a (see Fig. 1), and when the control lever of the right operating device 123 is operated leftward or rightward, the operating device 123 functions as a bucket operating device 123b (see Fig. 1).

-Comparative Example-

Fig. 4 is a diagram showing a comparative example. In the comparative example, the signal pressure variable relief valve 16 in the hydraulic driving system of the present embodiment, shown in Fig. 1, is replaced by the signal pressure variable relief valve 116 described in Patent Document 1. In other words, as described in Patent Document 1, in the hydraulic driving apparatus of the load-sensing control system with the signal pressure variable relief valve 116 on the highest load pressure line 35, the main relief valve 14 is configured as a variable relief valve such that as described in Patent Document 2, during track operation the set pressure of the main relief valve 14 increases from the first value PS1 to the second value PS2.

The signal pressure variable relief valve 116 in Fig. 4 does not include the pressure receiving element 16c in the present embodiment shown in Fig. 1. Accordingly the signal pressure variable relief valve 116 has its set pressure PA controlled to satisfy the following relationship with respect to the output pressure (absolute pressure) PGR of the prime mover revolution speed detection valve 13, applied to the pressure receiving element 16b.

$$PA = PS1 + \alpha - PGR$$

Transformation of the above expression gives:

$$PA = PS1 - (PGR - \alpha)$$

As described above, PS1 is the set pressure of the main relief valve 14 that applies when neither the track operating device 124a nor 124b is actuated, and $PS1+\alpha$ is the pressure value set by the spring constant of the spring 16a. In the above expressions, $\alpha$ is an LS control adjustment value greater than 0, but less than PGR.

Other constituent elements of the apparatus shown as the comparative example in Fig. 4 are substantially the same as those of the hydraulic driving system of the present embodiment, shown in Fig. 1.

In the comparative example, since the signal pressure variable relief valve 116 is provided, when neither the track operating device 124a nor 124b is actuated and the track operating signal pressure Ptpi is the tank pressure, the highest load pressure Plmaxa that has been introduced into the differential pressure reducing valve 11 is limited to the set pressure of $PS1-(PGR-\alpha)$ of the signal pressure variable relief valve 116 by an action of the signal pressure variable relief valve 116, so that the absolute pressure Pls output from the differential pressure reducing valve 11 does not become zero (0) even after a cylinder-type actuator such as the boom cylinder 3a has reached its stroke end. For this reason, during combined actuator operations in that state, none of the other actuators stops operating.

The comparative example, however, might pose the following problems.

The main relief valve 14 increases the set pressure thereof from PS1 to PS2, only when at least one of the track operating devices 124a and 124b is actuated and the track operating signal pressure Ptpi equals or exceeds the threshold level Ptr. This increase is intended to ensure the output torque required of the track motors 3f and 3g during machine traveling, and thereby to enhance traveling performance.

In the configuration of the comparative example 1, however, if during track operation any impacts, such as an obstacle or inclination of a slope climbing travel surface, cause the track motor 3f or 3g to stop, load-sensing control acts to limit the delivery pressure Pp of the main pump 2 to a pressure obtained by adding the target differential pressure PGR of load-sensing control to the highest load pressure Plmaxa that is lower than the second value PS2 of the set pressure of the main relief valve 14 and limited by the signal pressure variable relief valve 116. As a result, the load pressure of the track motor 3f or 3g fails to increase to the second value PS2 of the set pressure of the main relief valve 14. This disadvantageously fails to secure the enough amount of output torque of the track motor 3f or 3g utilizing the increase in the set pressure of the main relief valve 14.

Left side (a) of Fig. 5 represents the relationship between the delivery pressure Pp of the main pump 2 that is obtained in the comparative example of Fig. 4 when the control lever of a non-track operating device is operated and the delivery pressure Pp of the main pump 2 reaches the set pressure PS1 of the main relief valve 14, and the highest load pressure Plmaxa in which a maximum pressure is limited by the signal pressure variable relief valve 116.

When an actuator other than the track motors 3f and 3g, such as the boom cylinder 3a, reaches the stroke end, as shown in left side (a) of Fig. 5 the load pressure of this actuator increases and the delivery pressure Pp of the main pump 2 increases to the first value PS1 of the set pressure. At this time, the highest load pressure Plmaxa in the downstream side of the restrictor 17 on the highest load pressure line 35 is limited to PS1-(PGR-α) by the signal pressure variable relief valve 116 and this highest load pressure Plmaxa is introduced into the differential pressure reducing valve 11. The absolute pressure Pls output from the differential pressure reducing valve 11 is introduced into the pressure compensating valves 7a to 7h as a target compensation differential pressure. At this time, since the target compensation differential pressure (Pp-Plmaxa) is held at a value greater than 0 but less than PGR, the pressure compensating valves 7a to 7h do not fully close, in which state a plurality of any other actuators can be operated in combination.

In addition, the absolute pressure PGR output from the prime mover revolution speed detection valve 13 to become a target LS differential pressure is introduced into the pressure receiving element 16b of the signal pressure variable relief valve 116. At any prime mover revolution speed, therefore, the highest load pressure Plmaxa is limited to PS1-(PGR-α) by the signal pressure variable relief valve 116, which means that irrespective of the revolution speed of the prime mover 1, appropriate performance characteristics can be obtained during combined operation.

Meanwhile, when at least one of the track operating devices 124a and 124b is actuated and the track operating signal pressure Ptpi equals or exceeds the threshold level Ptr, the track operating signal pressure Ptpi increases the set pressure of the main relief valve 14 from the first value PS1 to the second value PS2.

Right side (b) of Fig. 5 represents the relationship between the delivery pressure Pp of the main pump 2 that is obtained in the comparative example of Fig. 4 after at least one of the track operating devices 124a and 124b has been actuated and the track operating signal pressure Ptpi has equaled or exceeded the threshold level Ptr to cause the delivery pressure Pp to reach the set pressure PS2 of the main relief valve 14, and the highest load pressure Plmaxa in which the maximum pressure is limited by the signal pressure variable relief valve 116.

An obstacle, inclination of a slope climbing travel surface, or any other impacts may cause the track motor 3f or 3g to stop. As shown in right side (b) of Fig. 5, the load pressure of the track motor 3f or 3g increases with operation of the track control lever and consequently the delivery pressure Pp of the main pump 2 temporarily increases to PS2.

At the same time, however, the highest load pressure Plmaxa is limited to PS1-(PGR-α) by the signal pressure variable relief valve 116, as described above, and the absolute pressure Pls (Pp-Plmaxa) output from the differential pressure reducing valve 11, therefore, becomes PGR+(PS2-PS1)-α. Since PS2-PS1=ΔPt1, ΔPt1 is usually set to be a value larger than PGR, the target LS differential pressure. For this reason, the absolute pressure Pls becomes higher than the target LS differential pressure.

Sine PGR is introduced into a lower left end of Fig. 4 that shows the LS control valve 12b included in the regulator 12 of the main pump 2, and since Pls is introduced into a middle right end of Fig. 4, if Pls>PGR, the LS control valve 12b is pushed leftward in Fig. 4 to switch to a right-side position and thus a primary pilot pressure held at a fixed value by the pilot relief valve 32 is introduced into the LS control piston 12c via the LS control valve 12b and reduces the tilting of the main pump 2 by means of the LS control piston 12c. The reduction in the tilting of the main pump 2 continues until Pls has equaled PGR. This results in the delivery pressure Pp of the main pump 2 decreasing to PS1+α and maintained at this pressure level, as demonstrated in (b) of Fig. 5.

This means that the load pressure of the track motor 3f or 3g does not increase to the set pressure PS2 of the main relief valve 14, and thus there occurs the problem that the necessary output torque of the track motor 3f or 3g cannot be obtained despite the fact that the main relief valve 14 is made variable.

-Operation-

Next, operation of the present embodiment shown in Fig. 1 will be described.

First, the hydraulic fluid that has been delivered from the fixed displacement pilot pump 30 driven by the prime mover 1 is supplied to the hydraulic fluid supply line 31a. The prime mover revolution speed detection valve 13 is connected to the hydraulic fluid supply line 31a, and the prime mover revolution speed detection valve 13 outputs, through the flow rate detection valve 50 and the differential pressure reducing valve 51, the differential pressure across the flow detection valve 50 that is commensurate with the delivery flow rate of the pilot pump 30, as an absolute pressure PGR (a target LS differential pressure). Downstream of the prime mover revolution speed detection valve 13 is disposed the pilot relief valve 32, which generates a constant pilot pressure (primary pilot pressure) Ppi in the pilot hydraulic fluid supply line 31b.

(a) When the control levers of all operating devices are in neutral position

When the control levers of all operating devices are in neutral position, the tank pressure is introduced into the pressure receiving element 14b of the main relief valve 14 and the pressure receiving element 16c of the signal pressure variable relief valve 16 via the shuttle valves 70a, 70b, and 70c of the track operation detection circuit 70, and the signal pressure lines 36, 36a, and 36b. At this time, as shown in Fig. 2, the set pressure of the main relief valve 14 is the first value PS1 that has been set for the spring 14a, and the set pressure of the signal pressure variable relief valve 16 becomes the third value PA1, that is, PS1-(PGR-$\alpha$), that has been set for the spring 16a and the pressure receiving element 16b.

In addition, the control levers of all operating devices are in neutral position and thus, all flow control valves 6a to 6h are also set to neutral position. Since the flow control valves 6a to 6h are all set to neutral position, the highest load pressure detection circuit 9 detects the tank pressure as the highest load pressure Plmax, which is then introduced into the unloading valve 15.

Since the tank pressure is introduced as the highest load pressure Plmax into the unloading valve 15, if it is assumed that the tank pressure is 0, the set pressure of the unloading valve 15 has a value obtained by adding, to the conversion value of the urging force of the spring 15b, the output pressure PGR (target LS differential pressure) of the prime mover revolution speed detection valve 13 that is applied to the pressure receiving element 15a of the unloading valve 15, and the pressure Pp of the hydraulic fluid supply line 5, based on its set pressure, is held at a pressure value obtained by adding the conversion value of the urging force of the spring 15b to the target LS differential pressure PGR, that is, Pp>PGR holds.

In addition, the highest load pressure Plmax is introduced into the downstream side of the restrictor 17 via the restrictor 17, and the highest load pressure Plmaxa in the downstream side of the restrictor 17 is introduced into the differential pressure reducing valve 11 and the signal pressure variable relief valve 16. As described above, the set pressure of the signal pressure variable relief valve 16 at this time is PS1-(PGR-$\alpha$), which is much higher than the Plmax held at the tank pressure. Accordingly, Plmax is not limited by the signal pressure variable relief valve 16 and this results in Plmaxa=Plmax.

The differential pressure reducing valve 11 outputs the differential pressure (Pp-Plmaxa) between the pressure Pp of the hydraulic fluid supply line 5 (i.e., the delivery pressure of the main pump 2) and the highest load pressure Plmaxa (=Plmax), as the absolute pressure Pls.

When the control levers of all operating devices are in neutral position, since Plmaxa (=Plmax) is the tank pressure as described above, a relationship of Pls=Pp-Plmaxa=Pp>PGR holds if it is assumed that the tank pressure is 0.

The absolute pressure Pls that has been output from the differential pressure reducing valve 11 is introduced as a feedback LS differential pressure into the LS control valve 12b of the regulator 12. The LS control valve 12b compares Pls and PGR. Since Pls>PGR, the LS control valve 12b is then pushed leftward in Fig. 1 to switch to a right-side position and introduce a constant primary pilot pressure Ppi created by the pilot relief valve 32 into the LS control piston 12c. The capacity (flow rate) of the main pump 2 is maintained at a minimum because the constant primary pilot pressure Ppi is introduced into the LS control piston 12c.

(b) When the control lever of a non-track operating device is operated

When the control lever of a non-track operating device is operated, as in case (a) described above the tank pressure is introduced into the pressure receiving element 14b of the main relief valve 14 and the pressure receiving element 16c of the signal pressure variable relief valve 16 via the shuttle valves 70a, 70b, and 70c of the track operation detection circuit 70 and the signal pressure lines 36, 36a, and 36b. At this time, as shown in Fig. 2, the set pressure of the main relief valve 14 is the first value PS1 that was set for the spring 14a, and the set pressure of the signal pressure variable relief valve 16 becomes the third value PA1, that is, PS1-(PGR-$\alpha$), that was set for the spring 16a and the pressure receiving element 16b.

Consider a case in which the control lever of a non-track operating device, such as the boom control lever, is operated.

When the boom control lever is operated in a direction that the boom cylinder 3a becomes extended, that is, in a direction that the boom faces upward, an operating pilot pressure a1 for the boom is output from the pilot valve unit 60a for the boom and consequently the flow control valve 6a switches rightward in Fig. 1. Upon switching of the flow control valve 6a from its neutral position, the hydraulic fluid is supplied to the boom cylinder 3a. At the same time, the load pressure of the boom cylinder 3a is detected as the highest load pressure Plmax via the load port of the flow control valve 6a by the highest load pressure detection circuit 9 including the shuttle valves 9a, 9b, 9c, 9d, 9e, 9f, and 9g, and then the highest load pressure Plmax is introduced into the unloading valve 15. The highest load pressure Plmax is also introduced into the downstream side of the restrictor 17, and in the downstream side of the restrictor 17, the highest load pressure Plmaxa is introduced into the differential pressure reducing valve 11 and the signal pressure variable relief valve 16.

Since the highest load pressure Plmax is introduced into the unloading valve 15, the set pressure of the unloading valve 15 increases to the pressure of (PGR + conversion value of the urging force of the spring 15b + Plmax), obtained by adding three factors, namely the output pressure (target LS differential pressure) PGR of the prime mover revolution speed detection valve 13 that is applied to the pressure receiving element 15a, the conversion value of the urging force of the spring 15b, and the highest load pressure Plmax (the load pressure at a bottom side of the boom cylinder 3a). This increase interrupts the fluid line provided to discharge the hydraulic fluid within the hydraulic fluid supply line 5 into the tank.

The set pressure of the signal pressure variable relief valve 16, on the other hand, is PS1-(PGR-$\alpha$) as described above, and thus the maximum pressure of the highest load pressure Plmaxa in the downstream side of the restrictor 17 is limited to PS1-(PGR-$\alpha$).

The differential pressure reducing valve 11 outputs the differential pressure (Pp-Plmaxa) between the pressure Pp of the hydraulic fluid supply line 5 (i.e., the delivery pressure of the main pump 2) and the highest load pressure Plmaxa, as the absolute pressure Pls. The absolute pressure Pls is then introduced as a feedback LS differential pressure into the LS control valve 12b of the regulator 12. The LS control valve 12b compares Pls and PGR.

Immediately after the control lever for raising the boom has been operated, the delivery pressure Pp of the main pump 2 is lower than the load pressure of the boom cylinder 3a (i.e., Pp<Plmax), so that the absolute pressure (feedback LS differential pressure) Pls that is output from the differential pressure reducing valve 11 is derived as Pls=Pp-Plmaxa<PGR.

Since Pls<PGR, the LS control valve 12b of the regulator 12 is pushed rightward in Fig. 1. The LS control valve 12b, therefore, switches to a left position and after releasing the hydraulic fluid from the LS control piston 12c to the tank, increases the tilting (capacity) of the main pump 2. This increase in the tilting of the main pump 2 continues until Pls=PGR, that is, Pp=Plmaxa+PGR has been achieved.

The hydraulic fluid that has been delivered from the main pump 2 to the hydraulic fluid supply line 5 is supplied to the bottom side of the boom cylinder 3a via the pressure compensating valve 7a and the flow control valve 6a. This extends the boom cylinder 3a. Upon extension of the boom cylinder 3a to the stroke end, the load pressure of the boom cylinder 3a and the pressure Pp of the hydraulic fluid supply line 5 (i.e., the delivery pressure of the main pump 2) increase to the set pressure PS1 of the main relief valve 14.

Left side (a) of Fig. 6 represents the relationship between the delivery pressure Pp of the main pump 2 that is obtained when the control lever of a non-track operating device is operated and the delivery pressure Pp reaches the set pressure PS1 of the main relief valve 14, and the highest load pressure Plmaxa in which the maximum pressure is limited by the signal pressure variable relief valve 16.

As shown in left side (a) of Fig. 6, the pressure Pp of the hydraulic fluid supply line 5, that is, the delivery pressure Pp of the main pump 2, increases to PS1 because the set pressure of the main relief valve 14 is PS1.

In the meantime, since the set pressure of the signal pressure variable relief valve 16 is PS1-(PGR-$\alpha$), the highest load pressure Plmaxa in the downstream side of the restrictor 17 is limited to the set pressure of PS1-(PGR-$\alpha$). The absolute pressure Pls output from the differential pressure reducing valve 11 is consequently given as follows:

$$\mathrm{Pls} = \mathrm{Pp} - \mathrm{Plmaxa} = \mathrm{PS1} - (\mathrm{PS1} - (\mathrm{PGR} - \alpha)) = \mathrm{PGR} - \alpha$$

where $\alpha$ is a value larger than 0, but less than PGR as described earlier herein, and thus

$$0 < \mathrm{Pls} < \mathrm{PGR}$$

is obtained.

Accordingly, even after the boom cylinder 3a has reached the stroke end and the load pressure of the boom cylinder 3a has reached the set pressure PS1 of the main relief valve 14, the feedback LS differential pressure Pls does not become 0. The pressure compensating valves 7a to 7h do not fully close, and even during combined actuator operations in that state, none of the other actuators stops operating.

In addition, the absolute pressure PGR that has been output from the prime mover revolution speed detection valve 13 and becomes the target LS differential pressure is introduced into the pressure receiving element 16b of the signal pressure variable relief valve 16, and as the target LS differential pressure PGR decreases, the third value PA1 and fourth value PA2 of the set pressure of the signal pressure variable relief valve 16 increase, which in turn reduces the absolute pressure Pls (differential pressure between the delivery pressure Pp of the main pump 2 and the highest load pressure Plmaxa in the downstream side of the restrictor 17) that is output from the differential pressure reducing valve 11. For this reason, even if change in prime mover revolution speed causes the target LS differential pressure PGR to change to any value, the maximum pressure of the highest load pressure Plmaxa is limited to PS1-(PGR-α) by the signal pressure variable relief valve 16 and thus the differential pressure Pls between the delivery pressure Pp of the main pump 2 and the highest load pressure Plmaxa in the downstream side of the restrictor 17 changes according to the particular target LS differential pressure PGR. Irrespective of the revolution speed of the prime mover 1, therefore, appropriate performance characteristics can be obtained during combined operation.

(c) When the control lever of at least one of the track operating devices is operated

When the control lever of at least one of the track operating devices 124a and 124b is operated, if, after selection of a higher pressure by a corresponding one of the shuttle valves 70a, 70b, and 70c of the track operation detection circuit 70, the track operating signal pressure Ptpi that has been introduced into the pressure receiving element 14b of the main relief valve 14 and the pressure receiving element 16c of the signal pressure variable relief valve 16 equals or exceeds the threshold level Ptr, then as shown in Fig. 2, the set pressure of the main relief valve 14 increases to PS2 obtained by adding ΔPt, a value that has been set by application of the track operating signal pressure Ptpi of the pressure receiving element 16c, to the first actuator value PS1 that has been set for the spring 14a. In addition, the set pressure of the signal pressure variable relief valve 16 increases to PS2+α-PGR, that is, PA2 obtained by adding ΔPt, the value that was set by the application of the track operating signal pressure Ptpi of the pressure receiving element 16c, to the third value PA1 that has been set for the spring 16a and the pressure receiving element 16b.

Consider here a case in which the pilot valve (pressure reducing valve), shown in the left of the relevant figure and constituting a part of the left-track pilot valve unit 60f for the track operating device 124a, is operated. Since the operating pilot pressure f1 of the pilot valve is introduced into the left side of the flow control valve 6f in Fig. 1, the flow control valve 6f is pushed rightward to switch to a left position in the figure. This causes the hydraulic fluid to be supplied to a left port of the left-track motor 3f, shown in Fig. 1. In addition, the load pressure upon the left-track motor 3f is detected as a highest load pressure Plmax via the load port of the flow control valve 6f via the shuttle valves 9e, 9f, 9g and then the highest load pressure Plmax is introduced into the unloading valve 15. The highest load pressure Plmax is also introduced into the downstream side of the restrictor 17, and in the downstream side of the restrictor 17, then the highest load pressure Plmaxa is introduced into the differential pressure reducing valve 11 and the signal pressure variable relief valve 16.

Since the highest load pressure Plmax is introduced into the unloading valve 15, the set pressure of the unloading valve 15 increases to the pressure of (PGR + conversion value of the urging force of the spring 15b + Plmax), obtained by adding three factors, namely the output pressure PGR (target LS differential pressure) of the prime mover revolution speed detection valve 13 that is applied to the pressure receiving element 15a, the conversion value of the urging force of the spring 15b, and the highest load pressure Plmax (the load pressure upon the left-track motor 3f). This increase interrupts the fluid line provided to discharge the hydraulic fluid within the hydraulic fluid supply line 5 into the tank.

If the track operating signal pressure Ptpi is equal to or above the threshold level Ptr, on the other hand, the set pressure of the signal pressure variable relief valve 16 is PS2-(PGR-α) as described above, and thus the maximum pressure of the highest load pressure Plmaxa in the downstream side of the restrictor 17 is limited to PS2-(PGR-α).

The differential pressure reducing valve 11 outputs the differential pressure (Pp-Plmaxa) between the pressure Pp of the hydraulic fluid supply line 5 (i.e., the delivery pressure of the main pump 2) and the highest load pressure Plmaxa in the downstream side of the restrictor 17, as the absolute pressure Pls. The absolute pressure Pls is then introduced as a feedback LS differential pressure into the LS control valve 12b of the regulator 12.

The LS control valve 12b compares Pls and PGR as in above case (b), and controls the tilting of the main pump 2 such that Pls equals PGR. The hydraulic fluid that has been delivered from the main pump 2 to the hydraulic fluid supply line 5 is supplied to the left-track motor 3f via the pressure compensating valve 7f and the flow control valve 6f, thereby rotating the left-track motor 3f.

During motor rotation, if an obstacle, inclination of a slope climbing travel surface, or any other impacts cause the left-track motor 3f to stop, the load pressure of the left-track motor 3f and the pressure Pp of the hydraulic fluid supply line 5 (i.e., the delivery pressure of the main pump 2) both increase. If the track operating signal pressure Ptpi is equal to or above the threshold level Ptr, the set pressure of the main relief valve 14 increases to PS2 as shown in Fig. 2. The pressure Pp of the hydraulic fluid supply line 5 (i.e., the delivery pressure of the main pump 2) also increases to PS2.

Right side (b) of Fig. 6 represents the relationship between the delivery pressure Pp of the main pump 2 that is obtained after at least one of the track operating devices has been actuated and the track operating signal pressure Ptpi has equaled or exceeded the threshold level Ptr to cause the delivery pressure Pp to reach the set pressure PS2 of the main relief valve 14, and the highest load pressure Plmaxa in which the maximum pressure is limited by the signal pressure variable relief valve 16.

The set pressure of the main relief valve 14 is PS2 as shown in right side (b) of Fig. 6, and thus the pressure Pp of the hydraulic fluid supply line 5 (i.e., the delivery pressure of the main pump 2) also increases to PS2.

In the meantime, since the set pressure of the signal pressure variable relief valve 16 is PS2-(PGR-$\alpha$), the highest load pressure Plmaxa in the downstream side of the restrictor 17 is limited to the set pressure of PS2-(PGR-$\alpha$). The absolute pressure Pls output from the differential pressure reducing valve 11 is consequently given as follows:

$$Pls = Pp - Plmaxa = PS2 - (PS1 - (PGR-\alpha)) = PGR-\alpha$$

where $\alpha$ is a value larger than 0, but less than PGR as described above, and hence

$$0 < Pls < PGR$$

is obtained.

Since Pls<PGR, the LS control valve 12b of the regulator 12 is pushed rightward in Fig. 1. The LS control valve 12b, therefore, switches to the left position and after releasing the hydraulic fluid from the LS control piston 12c to the tank, increases the tilting (capacity) of the main pump 2. This increase in the tilting of the main pump 2 continues until Pls=PGR, that is, Pp=Plmaxa+PGR has been achieved.

That is to say, when the load pressure of the left-track motor 3f makes an attempt to reach the set pressure PS2 of the main relief valve 14, the signal pressure variable relief valve 16 works to limit the highest load pressure Plmaxa to PS2-(PGR-$\alpha$) and hence cause the feedback LS differential pressure Pls to become equal to PGR-$\alpha$ (i.e., as in the comparative example of Fig. 5, Pls does not become higher than PGR). Accordingly the delivery pressure from the main pump 2 (the load pressure of the left-track motor 3f) increases to the set pressure PS2 of the main relief valve 14, and as in the comparative example, failure of the load pressure of the left-track motor 3f to reach PS2 due to the load-sensing control of the main pump 2 does not arise.

Furthermore, if the load pressure of the left-track motor 3f reaches the set pressure PS2 of the main relief valve 14, the absolute pressure Pls output from the differential pressure reducing valve 11 as the target compensation differential pressure does not become 0, so that even during combined actuator operations in that state, none of the other actuators stops operating.

In addition, as in above case (b) in which a non-track operating device's control lever is operated, since the absolute pressure PGR that has been output from the prime mover revolution speed detection valve 13 and becomes the target LS differential pressure is introduced into the pressure receiving element 16b of the signal pressure variable relief valve 16, even if change in prime mover revolution speed causes the target LS differential pressure PGR to change to any value, the maximum pressure of the highest load pressure Plmaxa is limited by the signal pressure variable relief valve 16 according to the target LS differential pressure PGR. Irrespective of the revolution speed of the prime mover 1, therefore, appropriate performance characteristics can be obtained during combined operation.

Moreover, in the present embodiment, when the set pressure of the signal pressure variable relief valve 16 increases from the third value PA1 to the fourth value PA2, the set pressure increases by $\Delta$Pt2, the same value as the value $\Delta$Pt1 by which the set pressure of the main relief valve 14 increases from the first value PS1 to the second value PS2. Accordingly, when the state in which an actuator other than the track motors 3f and 3g is driven is shifted to the combined operation for simultaneous driving of the track motors 3f and 3g and then an increase in the load pressure of at least one of the track motors 3f and 3g causes the delivery pressure Pp from the main pump 2 to increase to the second value PS2 of the set pressure of the main relief valve 14, the differential pressure between the delivery pressure Pp of the main pump 2 and the highest load pressure Plmaxa is maintained at the same value before and after the delivery pressure Pp of the main pump 2 increases to PS2. For this reason, before and after the delivery pressure Pp of the main pump 2 increases to the second value PS2, the target compensation differential pressure across at least one of the pressure compensating valves 7a to 7h remains invariant, which in turn maintains a current operating speed of the particular actuator other than the track motors 3f and 3g, and provides appropriate performance characteristics during the combined operation.

-Advantages-

As set forth above, in the present embodiment, the signal pressure variable relief valve 16 includes the second pressure receiving element 16c in the side operative in the valve closing direction, and when the track operating signal pressure Ptpi applied to the second pressure receiving element 16c equals or exceeds the threshold level Ptr, as the set pressure of the main relief valve 14 increases from PS1 to PS2, the set pressure of the signal pressure variable relief valve 16 timely increases from PA1 to PA2 (= PS2-(PGR-α)). Thus, when the load pressure of the left-track motor 3f makes an attempt to reach the set pressure PS2 of the main relief valve 14, the relationship of Pls<PGR can be obtained by the action of the signal pressure variable relief valve 16. As shown in right side (b) of Fig. 6, therefore, load-sensing control enables the delivery pressure Pp of the main pump 2 to increase to PS2, ensures the output torque required of the track motors 3f and 3g during machine traveling, and enhances traveling performance.

In addition, even after the load pressure of the left-track motor 3f has reached the second set pressure PS2 of the main relief valve 14, the absolute pressure Pls output from the differential pressure reducing valve 11 as the target compensation differential pressure does not become 0, so that even during combined actuator operations in that state, none of the other actuators stops operating and appropriate performance characteristics are maintained.

Furthermore, since the absolute pressure PGR that has been output from the prime mover revolution speed detection valve 13 and becomes the target LS differential pressure is introduced into the pressure receiving element 16b of the signal pressure variable relief valve 16, even if change in prime mover revolution speed causes the target LS differential pressure PGR to change to any value, the maximum pressure of the highest load pressure Plmaxa is limited to PS1-(PGR-α) by the signal pressure variable relief valve 16. Irrespective of the revolution speed of the prime mover 1, therefore, appropriate performance characteristics can be obtained during combined operation.

Moreover, when the set pressure of the signal pressure variable relief valve 16 increases from the third value PA1 to the fourth value PA2, the set pressure increases by ΔPt2, the same value as the value ΔPt1 by which the set pressure of the main relief valve 14 increases from the first value PS1 to the second value PS2. Accordingly, when the state in which an actuator other than the track motors 3f and 3g is driven is shifted to the combined operation for the simultaneous driving of the track motors 3f and 3g and then the increase in the load pressure of at least one of the track motors 3f and 3g causes the delivery pressure Pp from the main pump 2 to increase to the second value PS2 of the set pressure of the main relief valve 14, the differential pressure between the delivery pressure Pp of the main pump 2 and the highest load pressure Plmaxa is maintained at the same value before and after the delivery pressure Pp of the main pump 2 increases to PS2. For this reason, before and after the delivery pressure Pp of the main pump 2 increases to PS2, the target compensation differential pressure across at least one of the pressure compensating valves 7a to 7h remains invariant, which in turn maintains a current operating speed of the particular actuator other than the track motors 3f and 3g, and provides appropriate performance characteristics during the combined operation.

-Others-

An example in which the construction machine is a hydraulic excavator and the specific actuator operated to increase the set pressure of the main relief valve 14 is one of the track motors 3f and 3g has been described in the present embodiment. This specific actuator may however be an actuator other than the track motors, or the number of specific actuators operated to increase the set pressure of the main relief valve 14 may be one, two, or more. For example, this number may be one, that is, at least one of the boom cylinder 3a, the arm cylinder 3b and the bucket cylinder 3d. When these actuators are operated, increasing the set pressure of the main relief valve 14 enables, for example, an excavation force or working speed/rate to be increased during excavation and loading, and working efficiency to be raised.

The present invention may also be applied to any construction machine other than a hydraulic excavator, only if the construction machine includes actuators that are preferably designed such that they can be driven with a greater force by increasing a set pressure of a main relief valve 14.

In addition, as described above in the embodiment, the construction machine includes the differential pressure reducing valve 11 configured to output the absolute pressure as the differential pressure between the delivery pressure of the main pump 2 and the highest load pressure Plmaxa, introduces the output pressure Pls into at least one of the pressure compensating valves 7a to 7h, sets the target compensation differential pressure, and introduces the target compensation differential pressure into the LS control valve 12b as the feedback differential pressure. The machine, however, may instead exclude the differential pressure reducing valve 11, introduce the delivery pressure of the main pump 2 and the highest load pressure into at least one of the pressure control valves 7a to 7h and the LS control valve 12b through independent fluid lines.

Furthermore, in the embodiment, while the absolute pressure PGR output from the prime mover revolution speed detection valve 13 has been used as the basis for setting the target LS differential pressure as the value that changes according to the particular revolution speed of the prime mover 1, the target LS differential pressure may be a fixed value if there is no need to change the target LS differential pressure according to the revolution speed of the prime mover 1.

Moreover, in the embodiment, when the set pressure of the signal pressure variable relief valve 16 increases from the third value PA1 to the fourth value PA2, although the set pressure increases by $\Delta Pt2$, the same value as the value $\Delta Pt1$ by which the set pressure of the main relief valve 14 increases from the first value PS1 to the second value PS2, $\Delta Pt2$ may not need to be the same value as the value $\Delta Pt1$, if the difference between the fourth value PA2 obtained after the set pressure of the signal pressure variable relief valve 16 has increased, and the second value PS2 of the set pressure of the main relief valve 14, is smaller than the target LS differential pressure PGR. For example, $\Delta Pt2$ may be set to be smaller than $\Delta Pt1$, in which case, when the current state of the machine is shifted to combined traveling operations, the differential pressure Pls between the delivery pressure Pp of the main pump 2 and the highest load pressure Plmaxa decreases, which renders traveling slower and hence enables safety to be enhanced during the combined traveling operations.

Description of Reference Numbers

**[0115]**

1: Prime mover
2: Main pump (Hydraulic pump)
3a to 3h: Actuators
3f and 3g: Track motors (Specific actuators)
4: Control valve unit
6a to 6h: Flow control valves
7a to 7h: Pressure compensating valves
9: Highest load pressure detection circuit
12: Regulator (Pump control device)
12c: LS control piston (Capacity control actuator)
12d: Torque control piston (Capacity control actuator)
14: Main relief valve
14b: Pressure receiving element of the main relief valve (First pressure receiving element)
15: Unloading valve
16: Signal pressure variable relief valve (Signal pressure relief valve)
16c: Pressure receiving element of the signal pressure variable relief valve (Second pressure receiving element)
17: Restrictor
35: Highest load pressure line
70: Track operation detection circuit
124a and 124b: Track operating devices

**Claims**

1. A hydraulic driving system for a construction machine, comprising:

   a hydraulic pump (2) of variable displacement type driven by a prime mover (1);
   a plurality of actuators (3a-3h) each driven by a hydraulic fluid delivered from the hydraulic pump (2);
   a plurality of flow control valves (6a-6h) that each control a flow rate of the hydraulic fluid supplied from the hydraulic pump (2) to a corresponding one of the plurality of actuators (3a-3h);
   a plurality of pressure compensating valves (7a-7h) each for controlling a differential pressure across a corresponding one of the flow control valves (6a-6h) independently such that the differential pressure across the corresponding flow control valve equals a target compensation differential pressure;
   a pump control device (12) for controlling a capacity of the hydraulic pump (2) by load-sensing control such that a delivery pressure of the hydraulic pump (2) becomes higher by a target differential pressure than a highest load pressure of the plurality of actuators (3a-3h);
   a main relief valve (14) that limits a maximum pressure of the delivery pressure of the hydraulic pump (2);
   a highest load pressure detection circuit (9) that detects a highest load pressure of the actuators (3a-3h) and outputs the detected highest load pressure to a highest load pressure line (35); and

a signal pressure relief valve (16) connected to the highest load pressure line (35) via a restrictor (17) and configured to limit the maximum pressure of the highest load pressure introduced to a downstream side of the restrictor (17), to a pressure lower than a set pressure of the main relief valve (14);

wherein,

the pump control device (12) receives a differential pressure between the delivery pressure of the hydraulic pump (2) and the highest load pressure in the downstream side of the restrictor (17) and the pump control device (12) controls the capacity of the hydraulic pump (2) such that the differential pressure equals the target differential pressure (PGR) for the load-sensing control, while the differential pressure between the delivery pressure of the hydraulic pump (2) and the highest load pressure in the downstream side of the restrictor (17) is introduced into the plurality of pressure compensating valves (7a-7h) as the target compensation differential pressure;

**characterized in that**:

the main relief valve (14) is configured such that

when a specific actuator (3f, 3g) of the plurality of actuators (3a-3h) is not actuated, the set pressure of the main relief valve (14) is remained at a first value (PS1), and

when the specific actuator (3f, 3g) is actuated, the set pressure of the main relief valve (14) increases from the first value (PS1) to a second value (PS2) larger than the first value (PS1); and

the signal pressure relief valve (16) is configured such that

when the specific actuator (3f, 3g) is not actuated and the set pressure of the main relief valve (14) is remained at the first value (PS1), the set pressure of the signal pressure relief valve (16) is remained at a third value (PA1) smaller than the first value (PS1) of the set pressure of the main relief valve (14), when the specific actuator (3f, 3g) is actuated and the set pressure of the main relief valve (14) increases to the second value (PS2), the set pressure of the signal pressure relief valve (16) increases from the third value (PA1) to a fourth value (PA2) smaller than the second value (PS2) of the set pressure of the main relief valve (14),

the first to fourth values (PS1, PS2, PA1, PA2) being set such that a difference (ΔPt1) between the first value (PS1) of the set pressure of the main relief valve (14) and the third value (PA1) of the set pressure of the signal pressure relief valve (16) and a difference (ΔPt2) between the second value (PS2) of the set pressure of the main relief valve (14) and the fourth value (PA1) of the set pressure of the signal pressure relief valve (16) are both smaller than the target differential pressure (PGR) for the load-sensing control.

2. The hydraulic driving system for a construction machine according to claim 1,
   wherein:
   the signal pressure relief valve (16) is configured such that when the set pressure of the signal pressure relief valve (16) increases from the third value (PA1) to the fourth value (PA2), the set pressure increases by the same value as a value by which the set pressure of the main relief valve (14) increases from the first value (PS1) to the second value (PS2).

3. The hydraulic driving system for a construction machine according to claim 1,
   wherein:
   the signal pressure relief valve (16) is configured such that as the target differential pressure (PGR) for the load-sensing control decreases, the third value (PA1) and fourth value (PA2) of the set pressure increase and the differential pressure between the delivery pressure of the hydraulic pump (2) and the highest load pressure in the downstream side of the restrictor (17) decreases.

4. The hydraulic driving system for a construction machine according to claim 1, further comprising:

   operating devices (122a, 122b-126) that each generate an operating pilot pressure for switching a corresponding one of the flow control valves (6a-6h),
   wherein:

   the main relief valve (14) includes a first pressure receiving element (14b) to which an operating pilot pressure generated by the operating device (124a, 124b) for the specific actuator (3f, 3g) generates is applied and is configured such that

when the operating pilot pressure applied to the first pressure receiving element (14b) is lower than a threshold level (Ptr), the set pressure of the main relief valve (16) is remained at the first value (PS1), and when the operating pilot pressure equals or exceeds the threshold level (Ptr), the set pressure of the main relief valve (14) increases to the second value (PS2); and

the signal pressure relief valve (16) includes a second pressure receiving element (16c) to which an operating pilot pressure generated by the operating device (124a, 124b) for the specific actuator (3f, 3g) generates is applied and is configured to such that when the operating pilot pressure applied to the second pressure receiving element (16c) is lower than the threshold level (Ptr), the set pressure of the signal pressure relief valve (16) is remained at the third value (PA1), and
when the operating pilot pressure equals or exceeds the threshold level (Ptr), the set pressure of the signal pressure relief valve (16) increases to the fourth value (PA2).

5. The hydraulic driving system for a construction machine according to claim 1, wherein:

the construction machine is a hydraulic excavator; and
the specific actuator (3f, 3g) is a track motor (3f, 3g) of the hydraulic excavator.

**Patentansprüche**

1. Hydraulisches Antriebssystem für eine Baumaschine, umfassend:

eine Hydraulikpumpe (2) vom Typ mit variabler Verdrängung, die von einem Antriebsmotor (1) angetrieben wird;
eine Vielzahl von Aktoren (3a-3h), die jeweils von einem Hydraulikfluid angetrieben werden, das von der Hydraulikpumpe (2) geliefert wird;
eine Vielzahl von Durchflusssteuerventilen (6a-6h), die jeweils einen Durchfluss des von der Hydraulikpumpe (2) zu einem entsprechenden Aktor aus der Vielzahl von Aktoren (3a-3h) zugeführten Hydraulikfluids steuern;
eine Vielzahl von Druckausgleichsventilen (7a-7h), die jeweils unabhängig voneinander einen Differenzdruck über ein entsprechendes der Durchflusssteuerventile (6a-6h) steuern, so dass der Differenzdruck über dem entsprechenden Durchflusssteuerventil einem Ziel-Kompensationsdifferenzdruck entspricht;
eine Pumpensteuervorrichtung (12) zum Steuern einer Kapazität der Hydraulikpumpe (2) durch Lasterfassungssteuerung, so dass ein Förderdruck der Hydraulikpumpe (2) um einen Ziel-Differenzdruck höher wird als ein höchster Lastdruck der Vielzahl von Aktoren (3a-3h);
ein Hauptentlastungsventil (14), das einen Maximaldruck des Förderdrucks der Hydraulikpumpe (2) begrenzt;
einen Höchstlastdruckerfassungskreis (9), der einen Höchstlastdruck der Aktoren (3a-3h) erfasst und den erfassten Höchstlastdruck an eine Höchstlastdruckleitung (35) ausgibt; und
ein Signaldruckentlastungsventil (16), das über einen Durchflussbegrenzer (17) mit der Höchstlastdruckleitung (35) verbunden und konfiguriert ist, um den maximalen Druck des Höchstlastdrucks, der an eine stromabwärts gelegene Seite des Durchflussbegrenzers (17) eingeleitet wird, auf einen Druck zu begrenzen, der niedriger ist als ein Solldruck des Hauptentlastungsventils (14);
wobei die Pumpensteuervorrichtung (12) einen Differenzdruck zwischen dem Förderdruck der Hydraulikpumpe (2) und dem höchsten Lastdruck auf der stromabwärts gelegenen Seite des Durchflussbegrenzers (17) empfängt und die Pumpensteuervorrichtung (12) die Kapazität der Hydraulikpumpe (2) so steuert, dass der Differenzdruck dem Ziel-Differenzdruck (PGR) für die Lasterfassungssteuerung entspricht, während der Differenzdruck zwischen dem Förderdruck der Hydraulikpumpe (2) und dem höchsten Lastdruck auf der stromabwärts gelegenen Seite des Durchflussbegrenzers (17) als der Ziel-Kompensationsdifferenzdruck in die Vielzahl der Druckausgleichsventile (7a-7h) eingeleitet wird,
**dadurch gekennzeichnet, dass**:

das Hauptentlastungsventil (14) so konfiguriert ist, dass,
wenn ein bestimmter Aktor (3f, 3g) der Vielzahl von Aktoren (3a-3h) nicht betätigt wird, der Solldruck des Hauptentlastungsventils (14) auf einem ersten Wert (PS1) gehalten wird, und
wenn der spezifische Aktor (3f, 3g) betätigt wird, der Solldruck des Hauptentlastungsventils (14) von dem ersten Wert (PS1) auf einen zweiten Wert (PS2) ansteigt, der größer als der erste Wert (PS1) ist; und

das Signaldruckentlastungsventil (16) so konfiguriert ist, dass,
wenn der spezifische Aktor (3f, 3g) nicht betätigt wird und der Solldruck des Hauptentlastungsventils (14) auf dem ersten Wert (PS1) gehalten wird, der Solldruck des Signaldruckentlastungsventils (16) auf einem dritten Wert (PA1) gehalten wird, der kleiner als der erste Wert (PS1) des Solldrucks des Hauptentlastungsventils (14) ist,
wenn der spezifische Aktor (3f, 3g) betätigt wird und der Solldruck des Hauptentlastungsventils (14) auf den zweiten Wert (PS2) ansteigt, der Solldruck des Signaldruckentlastungsventils (16) von dem dritten Wert (PA1) auf einen vierten Wert (PA2) ansteigt, der kleiner ist als der zweite Wert (PS2) des Solldrucks des Hauptentlastungsventils (14),
wobei der erste bis vierte Wert (PS1, PS2, PA1, PA2) so eingestellt sind, dass eine Differenz ($\Delta$Pt1) zwischen dem ersten Wert (PS1) des Solldrucks des Hauptentlastungsventils (14) und dem dritten Wert (PA1) des Solldrucks des Signaldruckentlastungsventils (16) und eine Differenz ($\Delta$Pt2) zwischen dem zweiten Wert (PS2) des Solldrucks des Hauptentlastungsventils (14) und dem vierten Wert (PA1) des Solldrucks des Signaldruckentlastungsventils (16) beide kleiner als der Ziel-Differenzdruck (PGR) für die Lasterfassungssteuerung sind.

2. Hydraulisches Antriebssystem für eine Baumaschine nach Anspruch 1, wobei:
das Signaldruckentlastungsventil (16) so konfiguriert ist, dass, wenn der Solldruck des Signaldruckentlastungsventils (16) von dem dritten Wert (PA1) auf den vierten Wert (PA2) ansteigt, der Solldruck um den gleichen Wert ansteigt wie ein Wert, um den der Solldruck des Hauptentlastungsventils (14) von dem ersten Wert (PS1) auf den zweiten Wert (PS2) ansteigt.

3. Hydraulisches Antriebssystem für eine Baumaschine nach Anspruch 1, wobei:
das Signaldruckentlastungsventil (16) so konfiguriert ist, dass bei abnehmendem Ziel-Differenzdruck (PGR) für die Lasterfassungssteuerung der dritte Wert (PA1) und vierte Wert (PA2) des Soll-Drucks zunehmen und der Differenzdruck zwischen dem Förderdruck der Hydraulikpumpe (2) und dem höchsten Lastdruck auf der stromabwärts gelegenen Seite des Durchflussbegrenzers (17) abnimmt.

4. Hydraulisches Antriebssystem für eine Baumaschine nach Anspruch 1, ferner umfassend:

Betätigungsvorrichtungen (122a, 122b-126), die jeweils einen Betriebsleitdruck zum Schalten eines entsprechenden der Durchflusssteuerventile (6a-6h) erzeugen,
wobei:

das Hauptentlastungsventil (14) ein erstes Druckaufnahmeelement (14b) enthält, an das ein von der Betätigungsvorrichtung (124a, 124b) für den spezifischen Aktor (3f, 3g) erzeugter Betriebsleitdruck angelegt wird und so konfiguriert ist, dass,
wenn der auf das erste Druckaufnahmeelement (14b) angewandte Betriebsleitdruck niedriger als ein Schwellenwert (Ptr) ist, der Solldruck des Hauptentlastungsventils (16) auf dem ersten Wert (PS1) gehalten wird, und wenn der Betriebsleitdruck den Schwellenwert (Ptr) erreicht oder überschreitet, der Solldruck des Hauptentlastungsventils (14) auf den zweiten Wert (PS2) steigt; und
das Signaldruckentlastungsventil (16) ein zweites Druckaufnahmeelement (16c) enthält, an das ein von der Betätigungsvorrichtung (124a, 124b) für den spezifischen Aktor (3f, 3g) erzeugter Betriebsleitdruck angelegt wird und so konfiguriert ist, dass, wenn der auf das zweite Druckaufnahmeelement (16c) angewandte Betriebsleitdruck niedriger ist als der Schwellenwert (Ptr), der Solldruck des Signaldruckentlastungsventils (16) auf dem dritten Wert (PA1) gehalten wird, und

wenn der Betriebsleitdruck den Schwellenwert (Ptr) erreicht oder überschreitet, der Solldruck des Signaldruckentlastungsventils (16) auf den vierten Wert (PA2) steigt.

5. Hydraulisches Antriebssystem für eine Baumaschine nach Anspruch 1, wobei:

die Baumaschine ein Hydraulikbagger ist; und
der spezifische Aktor (3f, 3g) ein Raupenmotor (3f, 3g) des Hydraulikbaggers ist.

**Revendications**

1. Système d'entraînement hydraulique pour une machine de chantier, comprenant :

une pompe hydraulique (2) de type à cylindrée variable entraînée par un moteur premier (1) ;

une pluralité d'actionneurs (3a-3h), chacun étant entraîné par un fluide hydraulique fourni depuis la pompe hydraulique (2) ;

une pluralité de vannes de commande d'écoulement (6a-6h), chacune commandant un débit du fluide hydraulique approvisionné depuis la pompe hydraulique (2) jusqu'à un actionneur correspondant parmi la pluralité d'actionneurs (3a-3h) ;

une pluralité de vannes de compensation de pression (7a-7h), chacune commandant une pression différentielle à travers une vanne correspondante parmi les vannes de commande d'écoulement (6a-6h) indépendamment de sorte que la pression différentielle à travers la vanne de commande d'écoulement correspondante est égale à une pression différentielle de compensation cible ;

un dispositif de commande de pompe (12) pour commander une capacité de la pompe hydraulique (2) par une commande de détection de charge de sorte qu'une pression fournie de la pompe hydraulique (2) devient supérieure à raison d'une pression différentielle cible à une pression de charge la plus élevée de la pluralité d'actionneurs (3a-3h) ;

une vanne de détente principale (14) qui limite une pression maximum de la pression fournie de la pompe hydraulique (2) ;

un circuit de détection de pression de charge la plus élevée (9) qui détecte une pression de charge la plus élevée des actionneurs (3a-3h) et qui sort la pression de charge la plus élevée détectée vers une conduite de pression de charge la plus élevée (35) ; et

une vanne de détente de pression de signal (16) reliée à une conduite de pression de charge la plus élevée (35) via une restriction (17) et configurée pour limiter la pression maximum de la pression de charge la plus élevée introduite vers un côté aval de la restriction (17) à une pression inférieure à une pression définie de la vanne de détente principale (14) ;

dans lequel,

le dispositif de commande de pompe (12) reçoit une pression différentielle entre la pression fournie de la pompe hydraulique (2) et la pression de charge la plus élevée dans le côté aval de la restriction (17), et le dispositif de commande de pompe (12) commande la capacité de la pompe hydraulique (2) de sorte que la pression différentielle est égale à la pression différentielle cible (PGR) pour la commande de détection de charge, tandis que la pression différentielle entre la pression fournie de la pompe hydraulique (2) et la pression de charge la plus élevée dans le côté aval de la restriction (17) est introduite jusque dans la pluralité de vannes de compensation de pression (7a-7h) à titre de pression différentielle de compensation cible ;

**caractérisé en ce que** :

la vanne de détente principale (14) est configurée de sorte que quand un actionneur spécifique (3f, 3g) de la pluralité d'actionneurs (3a-3h) n'est pas actionné, la pression définie de la vanne de détente principale (14) est maintenue à une première valeur (PS1), et

quand l'actionneur spécifique (3f, 3g) est actionné, la pression définie de la vanne de détente principale (14) augmente depuis la première valeur (PS1) jusqu'à une deuxième valeur (PS2) qui est supérieure à la première valeur (PS1) ; et

la vanne de détente de pression de signal (16) est configurée de sorte que quand l'actionneur spécifique (3f, 3g) n'est pas actionné et que la pression définie de la vanne de détente principale (14) est maintenue à la première valeur (PS1), la pression définie de la vanne de détente de pression de signal (16) est maintenue à une troisième valeur (PA1) qui est inférieure à la première valeur (PS1) de la pression définie de la vanne de détente principale (14),

quand l'actionneur spécifique (3f, 3g) est actionné et que la pression définie de la vanne de détente principale (14) augmente jusqu'à la deuxième valeur (PS2), la pression définie de la vanne de détente de pression de signal (16) augmente depuis la troisième valeur (PA1) jusqu'à une quatrième valeur (PA2) qui est inférieure à la deuxième valeur (PS2) de la pression définie de la vanne de détente principale (14),

les première, deuxième, troisième et quatrième valeurs (PS1, PS2, PA1, PA2) étant définies de sorte qu'une différence (ΔPt1) entre la première valeur (PS1) de la pression définie de la vanne de détente principale (14) et la troisième valeur (PA1) de la pression définie de la vanne de détente de pression de signal (16) et une différence (ΔPt2) entre la deuxième valeur (PS2) de la pression définie de la vanne de détente principale (14) et la quatrième valeur (PA1) de la pression définie de la vanne de détente de pression de signal (16) sont toutes deux inférieures à la pression différentielle cible (PGR) pour la commande de détection de charge.

2. Système d'entraînement hydraulique pour une machine de chantier selon la revendication 1, dans lequel :

la vanne de détente de pression signal (16) est configurée de sorte que, quand la pression définie de la vanne de détente de pression de signal (16) augmente depuis la troisième valeur (PA1) jusqu'à la quatrième valeur (PA2), la pression définie augmente de la même valeur qu'une valeur à laquelle la pression définie de la vanne de détente principale (14) augmente depuis la première valeur (PS1) jusqu'à la deuxième valeur (PS2).

3. Système d'entraînement hydraulique pour une machine de chantier selon la revendication 1, dans lequel :

la vanne de détente de pression de signal (16) est configurée de sorte que, quand la pression différentielle cible (PGR) pour la commande de détection de charge diminue, la troisième valeur (PA1) et la quatrième valeur (PA2) de la pression définie augmentent, et la pression différentielle entre la pression fournie de la pompe hydraulique (2) et la pression de charge la plus élevée dans le côté aval de la restriction (17) diminue.

4. Système d'entraînement hydraulique pour une machine de chantier selon la revendication 1, comprenant en outre :

des dispositifs d'actionnement (122a, 122b-126), chacun générant une pression pilote d'actionnement pour commuter une vanne correspondante parmi les vannes de commande d'écoulement (6a-6h), dans lequel :

la vanne de détente principale (14) inclut un premier élément de réception de pression (14b) auquel est appliquée une pression pilote d'actionnement générée par le dispositif d'actionnement (124a, 124b) pour l'actionneur spécifique (3f, 3g), et est configurée de sorte que quand la pression pilote d'actionnement appliquée au premier élément de réception de pression (14b) est inférieure à un niveau seuil (Ptr), la pression définie de la vanne de détente principale (14) est maintenue à la première valeur (PS1), et quand la pression pilote d'actionnement est égale ou dépasse le niveau seuil (PTr), la pression définie de la vanne de détente principale (14) augmente jusqu'à la deuxième valeur (PS2) ; et

la vanne de détente de pression de signal (16) inclut un deuxième élément de réception de pression (16c) auquel est appliquée une pression pilote d'actionnement générée par le dispositif d'actionnement (124a, 124b) pour l'actionneur spécifique (3f, 3g), et est configurée de sorte que, quand la pression pilote d'actionnement appliquée au deuxième élément de réception de pression (16c) est inférieure au niveau seuil (Ptr), la pression définie de la vanne détente de pression de signal (16) est maintenue à la troisième valeur (PA1), et quand la pression pilote d'actionnement est égale ou dépasse le niveau seuil (Ptr), la pression définie de la vanne de détente de pression signal (16) augmente à la quatrième valeur (PA2).

5. Système d'entraînement hydraulique pour une machine de chantier selon la revendication 1, dans lequel :

la machine de chantier est une pelle hydraulique ; et l'actionneur spécifique (3f, 3g) est un moteur de chenilles (3f, 3g) de la pelle hydraulique.

FIG. 1

## FIG. 2

Track Operating Signal Pressure Ptpi

EP 3 159 550 B1

FIG. 3

EP 3 159 550 B1

FIG. 4

Comparative Example

# FIG.5

(a) When Non-Track Actuator Load Pressure Has Reached Relief Pressure

(b) When Track Motor Load Pressure Has Increased to Reach Relief Pressure

Comparative Example

# FIG.6

(a) When Non-Track Actuator Load Pressure Has
Reached Relief Pressure

(b) When Track Motor Load Pressure Has
Reached Relief Pressure

Present Invention

EP 3 159 550 B1

**EP 3 159 550 B1**

### Patent documents cited in the description

- JP 3854027 B
- JP 2600928 B